# EUROPÄISCHE PATENTSCHRIFT

(11) **EP 3 878 035 B1**
(45) Veröffentlichungstag und Bekanntmachung des Hinweises auf die Patenterteilung: **11.10.2023**
(21) Anmeldenummer: 19804653.4
(22) Anmeldetag: 06.11.2019
(51) Int. Cl.: H01M 4/36, H01M 4/38, H01M 6/18, H01M 6/22, H01M 10/052, H01M 10/0562, H01M 10/0565, H01M 4/02, B05D 3/00, B05D 3/06, B05D 3/10, B05D 3/12, B05D 1/02

(54) **STRUKTURIERTE METALL-ELEKTRODE UND DEREN KOMBINATION MIT NICHT-FLÜSSIGEM ELEKTROLYTEN**
STRUCTURED METAL ELECTRODE AND COMBINATION THEREOF WITH NON-LIQUID ELECTROLYTES
ÉLECTRODE MÉTALLIQUE STRUCTURÉE ET SA COMBINAISON AVEC DES ÉLECTROLYTES NON LIQUIDES

(30) Priorität: 07.11.2018 DE 102018127787
(43) Veröffentlichungstag der Anmeldung: 15.09.2021
(73) Patentinhaber: Westfälische Wilhelms-Universität Münster, 48149 Münster (DE); Forschungszentrum Jülich GmbH, 52428 Jülich (DE)
(72) Erfinder: WINTER, Martin, 48149 Münster (DE); WIEMHÖFER, Hans-Dieter, 48161 Münster (DE); FINSTERBUSCH, Martin, 52428 Jülich (DE); ARINICHEVA, Yulia, 52074 Aachen (DE); BIEKER, Peter Maria, 59063 Hamm (DE); JALKANEN, Kirsi, 02650 Espoo (FI); LIEBENAU, Dominik, 48161 Münster (DE); KOLEK, Martin, 48149 Münster (DE); BECKING, Jens, 48161 Münster (DE); STAN, Marian Christian, 59075 Hamm (DE); SCHMOHL, Sebastian, 48151 Münster (DE); SCHMITZ, Paulo, 49779 Niederlangen (DE)
(74) Vertreter: Michalski Hüttermann & Partner Patentanwälte mbB
(86) Internationale Anmeldenummer: PCT/EP2019/080425
(87) Internationale Veröffentlichungsnummer: WO 2020/094729

(56) Entgegenhaltungen:
- DE-A1-102017 201 233
- US-A1- 2017 200 943

## Beschreibung

Die Erfindung betrifft das Gebiet der elektrochemischen Energiespeicher. Insbesondere betrifft die Erfindung eine strukturierte Metall-Elektrode und deren Verwendung in Kombination mit nicht-flüssigen Elektrolyten.

Metall-Batterien basierend auf Metallen wie Eisen, Natrium, Calcium, Magnesium, Aluminium oder Lithium bieten gegenüber herkömmlichen Lithium-Ionen-Batterien den Vorteil, dass höhere theoretische Energiedichten erreicht werden können. Insbesondere Lithium-Luft-Batterien weisen eine hohe spezifische Kapazität und Energie auf. In diesen reversiblen Metallbatterien wird Lithiummetall als Anode verwendet. Die praktische Anwendung ist bislang jedoch unter anderem aufgrund der reaktiven Natur des Lithiummetalls und einer resultierenden Verschlechterung der Performance und Sicherheit bei der Anwendung noch nicht ausgereift. Insbesondere Lithium ist aufgrund eines geringen Redoxpotentials, seiner hohen Kapazität und geringen Molekulargewichts ein viel versprechendes Elektrodenmaterial. Eine geringe Zyklenstabilität und Sicherheitsbedenken resultierend aus einem Dendritenwachstum auf der Elektrode, insbesondere bei hohen Stromdichten, limitieren jedoch eine Anwendung. Lithium-Elektroden können ein hohes Überpotential bzw. Überspannung sowie hohe Zellwiderstände aufweisen. Daher ist die Anwendung von Lithium-Elektroden bislang bis auf wenige Ausnahmen auf Primärzellen beschränkt.

Aus der Schrift DE 10 2013 114 233 A1 ist bereits bekannt, die Oberfläche einer Lithium-Elektrode mit Ausnehmungen zu strukturieren, so dass diese bei Verwendung mit einem flüssigen Elektrolyten eine verbesserte Entladungsrate, Laderate und Zyklenstabilität zur Verfügung stellen. Die DE 10 2014 207 999 A1 offenbart weiter eine strukturierte Lithiummetall-Anode, wobei die Kavitäten der Strukturierung mit Anodenmaterial gefüllt sind. Die US 6576371 B1 beschreibt eine Batterie mit festem Elektrolyten, bei der auf der positiven Elektrode eine feste Mehrschichtstruktur ausgebildet ist, wobei eine Elektrolytschicht deutlich weicher ist als eine weitere feste Elektrolytschicht. Eine Strukturierung der Metallelektrode wird nicht beschrieben.

Die DE 10 2017 20 133 A1 zeigt eine, mit einem Polymerelektrolyten beschichtete Metalelektrode mit Ausnehmungen.

Um das Potential der Metall-Elektroden auszunutzen, bedarf es weiterer Verbesserungen. Der vorliegenden Erfindung lag daher die Aufgabe zu Grunde, eine Metallelektrode mit geringerem Abscheidungswiderstand zur Verfügung zu stellen.

Diese Aufgabe wird gelöst durch eine Metall-Elektrode oder einen Stromsammler für einen Energiespeicher nach Anspruch 1 gelöst.

Überraschend wurde gefunden, dass die erfindungsgemäße Kombination von Ausnehmungen, die in der Oberfläche der Metall-Elektrode oder des Stromsammlers vorgesehenen sind, und einer funktionellen Beschichtung mit einem festen Polymerelektrolyten eine deutliche Erniedrigung der Abscheidespannung bzw. des Abscheidewiderstandes zur Verfügung stellen kann. So konnte eine deutliche Verminderung des Zellwiderstands gezeigt werden. Dies ist insbesondere in Verbindung mit der Verwendung von nicht flüssigen Elektrolyten von Vorteil, da der Widerstand von Lithium-Elektroden diesen gegenüber grundsätzlich hoch ist. Hierdurch kann die Zyklierbarkeit von Metall-Elektroden, insbesondere von Lithium-Elektroden, mit nicht flüssigen Elektrolyten wesentlich verbessert werden, und damit die Lebensdauer einer Zelle deutlich erhöht werden. Weiterhin kann die funktionelle Beschichtung den Kontakt zu nicht flüssigen Elektrolyten wie Gel-Polymere, Feststoff-Polymere, Keramik-Festkörper, Gläser und Kombinationen aus diesen, sog. Hybride, verbessern. Die Verwendung nicht-flüssiger Elektrolyte verbessert weiterhin die Sicherheit der Verwendung einer Lithium-Elektrode, insbesondere kann eine erhöhte Sicherheit bei Fehlfunktionen oder Beschädigung einer Batterie zur Verfügung gestellt werden. Ein weiterer Vorteil liegt darin, dass eine geschützte Metallelektrode mit gerichteter Lithiumabscheidung zur Verfügung gestellt werden kann.

Ohne auf eine Theorie festgelegt zu sein, wird angenommen, dass die Vorteile der Erfindung auf der Kombination der Strukturierung und der funktionellen Beschichtung, die den Kontakt zwischen der strukturierten Metall-Elektrode fördert, beruhen. Für die Strukturierung können einfache, auf Rolle-zu-Rolle übertragbare, Prinzipien der Bearbeitung genutzt werden, während die Beschichtung mittels einfacher Beschichtungstechniken aufbringbar ist. Die Bearbeitung der Elektrode bzw. des Stromsammlers, lässt sich auf skalierbare Systeme übertragen, womit ein kommerzielles Interesse bestärkt werden kann.

Unter dem Begriff "Polymerelektrolyt" bzw. polymerer Elektrolyt werden Lösungen von Salzen wie Lithiumbis(oxalato)borat (LiBOB) in Polymeren wie Poly[bis((methoxyethoxy)ethoxy)phosphazen] (MEEP) verstanden. Der Transport der Ladung erfolgt hierbei durch eine Bewegung der Kationen insbesondere Lithium-Ionen des Salzes durch den Polymerelektrolyten. Unter dem Begriff "fester Polymerelektrolyt" wird ein Polymer mit einem darin gelösten Lithiumsalz verstanden, das bei Raumtemperatur durch Vernetzung im festen Aggregatzustand vorliegt und keine flüssigen Bestandteile wie flüssiges Lösungsmittel enthält.

Die Oberfläche der Elektrode, in der die Ausnehmungen und Beschichtung vorgesehen sind, entspricht geeigneter Weise der Seite, an der in einer galvanischen Zelle oder Batterie ein Elektrolyt ansteht. Die Oberfläche der Elektrode weist eine Mehrzahl insbesondere eine Vielzahl von Ausnehmungen auf. Die einzelnen Ausnehmungen sind voneinander beabstandet, wobei dies nicht ausschließt, dass nicht durch die Herstellung der Ausnehmungen ineinander übergehen können. Die Ausnehmungen sind Sackloch-artig. Unter dem Begriff "Sackloch-artig" wird im Sinne der vorliegenden Erfindung verstanden, dass die Ausnehmungen die Metall-Elektrode nicht vollständig durchbrechen, also einen Boden oder eine Spitze aufweisen.

Die Form der Ausnehmungen bzw. der Strukturierung kann variiert werden. Die Ausnehmungen können verschiedene Geometrien aufweisen. Beispielsweise können die Ausnehmungen im Querschnitt rechteckig, trapezförmig, kalottenförmig oder dreieckig ausgebildet sein. Die Ausnehmungen können durch Umformverfahren in das Metall eingebracht werden. Die Ausnehmungen können beispielsweise mittels Prägeverfahren über Stempel oder mittels Walzen insbesondere Kalanderwalzen eingebracht werden. Derartige Verfahren für eine mechanische Strukturierung sind bevorzugt. Es kann auch ein Laser oder Strahlverfahren genutzt werden. Als Elektroden verwendbare Metallfolien können vorzugsweise mittels Walzen des Ausgangsmaterials bzw. Metalls hergestellt werden. Für Lithium werden insbesondere mit einer Legierung versehene bzw. beschichtete Walzen verwendet. Ein Stempel oder eine Walze, die eine entsprechend den Ausnehmungen positiv strukturierte Oberfläche aufweist, kann die Ausnehmungen in eine Metallfolie gewünschter Dicke einbringen. Die Form der Strukturierung der Stempel oder Walze kann ausgewählt sein aus Quader, Zylinder, Pyramiden, überkappte Quader und/oder Halbkreise, so dass die Geometrie der Ausnehmungen inverser Quader, Zylinder, Pyramiden, überkappte Quader und/oder Halbkreise entsprechen kann. Vorzugsweise können Quader oder pyramidale oder zylindrische Formen verwendet werden.

Neben der Form, beispielsweise rechteckig oder in Form einer Pyramide, können weiter die Größe und der Abstand der Spitzen in Stempel oder Walze variiert werden, wobei unterschiedliche Strukturierungen und Oberflächenvergrößerungen erhalten werden können. Beispielsweise können die Abstände der Strukturen variiert werden. Eine Variation des Abstands zwischen den Strukturen ergibt verschiedene Strukturierungsdichten. Durch eine höhere Dichte der Strukturierung wird die gesamte Oberfläche einer Lithium-Elektrode erhöht, wobei die Oberflächenvergrößerung von den Defektenabständen abhängt. In bevorzugten Ausführungsformen ist die strukturierte Oberfläche der Elektrode in einem Bereich von ≥ 20 % bis ≤ 200 %, vorzugsweise von ≥ 30 % bis ≤ 150 %, bevorzugt von ≥ 50 % bis ≤ 100 %, vergrößert, bezogen auf einer Fläche gleicher Abmessung mit planer Oberfläche. Hierbei wird die Fläche mit planer Oberfläche als 100 % gesetzt.

Weiter können die positiven Strukturen, beispielsweise quaderförmigen Nadeln, der Stempel oder Walze hinsichtlich ihrer Länge, Breite und Höhe verändert werden, um den Effekt von größeren oder kleineren Strukturierungen zu erzielen. Damit zusammenhängend kann mit der Höhe der Prägestruktur auch die Dicke des verwendeten Elektrodenmaterials wie Lithium verringert werden. Es ist bevorzugt, dass die Ausnehmungen eine Größe im Mikrometer-Bereich aufweisen. Strukturierungen einer Größe im Mikrometer-Bereich sind in vorteilhafter Weise in groß-industriellen Rahmen herstellbar. Erfindungsgemäß weisen die Ausnehmungen eine Länge, Breite und/oder Tiefe in einem Bereich von ≥ 200 µm bis ≤ 500 µm, bevorzugt von ≥ 300 µm bis ≤ 400 µm, auf. So können bei quaderförmigen Ausnehmungen Länge, Breite und Tiefe in einem Bereich von ≥ 200 µm x 200 µm x 200 µm bis ≤ 500 µm x 500 µm x 500 µm, bevorzugt von ≥ 300 µm x 300 µm x 300 µm bis ≤ 400 µm x 400 µm x 400 µm, liegen. Die strukturierte Oberfläche bzw. strukturierte Elektrode ist insbesondere eine mikrostrukturierte Oberfläche bzw. mikrostrukturierte Lithium-Elektrode.

In weiter bevorzugten Ausführungsformen weisen die Ausnehmungen eine Tiefe in einem Bereich von ≥ 25 µm bis ≤ 75 µm, vorzugsweise in einem Bereich von ≥ 30 µm bis ≤ 50 µm, bevorzugt von ≥ 35 µm bis ≤ 40 µm, und eine Länge und/oder Breite in einem Bereich von ≥ 200 µm bis ≤ 500 µm, bevorzugt von ≥ 300 µm bis ≤ 400 µm, auf. Insbesondere bei quaderförmigen Ausnehmungen können Länge, Breite und Tiefe in einem Bereich von ≥ 200 µm x 200 µm x 30 µm bis ≤ 500 µm x 500 µm x 50 µm, bevorzugt von ≥ 300 µm x 300 µm x 35 µm bis ≤ 400 µm x 400 µm x 40 µm, liegen.

Die Dicke der Metallelektrode, wie einer Lithiumfolie, in die die Ausnehmungen geprägt werden, kann hierbei im Bereich von ≥ 300 µm bis ≤ 800 µm, vorzugsweise im Bereich von ≥ 300 µm bis ≤ 500 µm, liegen. Es ist ferner möglich, Lithium auf eine Schicht oder Folie eines anderen Metalls oder Stromsammlers als Trägermaterial, beispielsweise Kupfer, aufzubringen, beispielsweise zu pressen. Die Metallelektrode kann daher auch aus einer Lithiumschicht, die auf eine Schicht eines anderen Metalls wie Kupfer aufgebracht ist, ausgebildet sein. Die Lithiumschicht kann weiterhin auch auf elektronisch leitfähigen dreidimensionalen Strukturen wie Netzen, Geflechten oder Schäumen, beispielsweise Kupfergeflecht oder Kupferschaum als Trägermaterial, aufgebracht sein. Hierbei kann die Gesamtdicke, die Lithium und Trägermaterial einschließt, in einem Bereich von ≥ 20 µm bis ≤ 60 µm, vorzugsweise von ≥ 25 µm bis ≤ 40 µm, liegen.

In Ausführungsformen kann die Tiefe der Ausnehmungen bezogen auf eine Gesamtdicke der Metallelektrode oder Lithiumschicht auf einem Metall, Stromsammler oder anderen Strukturen als Trägermaterial von 100 % im Bereich von ≥ 30 % bis ≤ 70 %, vorzugsweise im Bereich von ≥ 40 % bis ≤ 60 %, insbesondere im Bereich von ≥ 50 % bis ≤ 60 %, liegen.

Das Konzept der Lithium-Strukturierung mittels Stempel oder vorzugsweise mittels Walzen ist je nach feinmechanischen Grenzen für die Stempel- bzw. Walzenfertigung auf nahezu beliebige Strukturierungsmuster übertragbar. Insbesondere weist eine Strukturierung mittels Walzen Potential für eine Hochskalierung zum industriellen Maßstab auf. So können für einen Rolle-zu-Rolle-Prozess entsprechende Rollen mit Spitzenstrukturierung gestaltet werden. Als Material für Block-Presse oder Walzen sind gegenüber Lithium unreaktive Materialien wie Polyoxymethylen (POM), Polyetheretherketon (PEEK), Polyethylen (PE), Polypropylen (PP), sowie nicht mit Lithium legierende Metalle wie Aluminium, Edelstahl oder Kupfer geeignet.

Die strukturierte Oberfläche ist mit einem festen Polymerelektrolyten beschichtet, wobei dieser die Ausnehmungen der Oberfläche füllt. Um eine strukturierte Lithium-Oberfläche mit einem nicht-flüssigen Elektrolyten zu benetzen und die vergrößerte Oberfläche völlig ausnutzen zu können, kann eine funktionelle Beschichtungsmethode eingesetzt werden. Für eine derartige Beschichtung wird eine Lösung aus den Bestandteilen des Elektrolyten hergestellt, einem geeigneten Polymer, Leitsalz und einem, vorzugsweise UV-Lichtaktivierbaren, Vernetzungsadditiv, die in einem geeigneten Lösungsmittel gelöst werden. Diese Lösung bzw. Mischung kann auf die strukturierte Lithium-Oberfläche aufgebracht werden, um eine homogene Beschichtung herzustellen. Die beschichteten Lithium-Elektroden können bei erhöhter Temperatur getrocknet werden, so dass das Lösungsmittel evaporiert, und mit UV-Licht bestrahlt werden, so dass das Polymer vernetzt und hierdurch eine Beschichtung mit einem festen Polymer-Elektrolyten ausgebildet wird. Mittels dieser Methode kann eine dünne Schicht aus Polymerelektrolyten auf eine strukturierte Lithium-Elektrode aufgebracht werden, so dass die Schicht dem Oberflächenmuster folgt und dadurch die gesamte Oberfläche benetzt.

In bevorzugten Ausführungsformen umfasst der feste Polymerelektrolyt ein Polymer ausgewählt aus der Gruppe umfassend Poly[bis((methoxyethoxy)ethoxy)phosphazen] (MEEP), Poly((oligo)oxethylen)methacrylat-*co*-Alkalimetall-methacrylat, Poly[bis((methoxyethoxy)ethoxy)-*co*-(lithium-trifluoro-oxoboran)polyphosphazen] (MEE-*co-*BF₃LiP), Polyethylenoxid (PEO), Poly(ethylenglycol) dimethylether (PEGDME), Polystyren-*b*-poly(ethylenoxid) (SPE), Polyvinylidenfluorid (PVdF), Poly(vinylidenfluorid-*co-*hexafluoropropylen) (PVdF-HFP), Polyacrylnitril (PAN), Polyester, Polypropylenoxid, Ethylenoxid/Propylenoxid Copolymer, Polymethylmethacrylat (PMMA), Polymethylacrylonitril (PMAN), Polysiloxan, Poly(chlorotrifluoro-ethylen), Poly(ethylen-chlorotrifluoro-ethylen) sowie deren Mischungen. Als Polymer sind vorzugsweise MEEP sowie dessen Derivat MEE-*co*-BF₃LIP, Polyethylenoxid (PEO), Polyvinylidenfluorid (PVdF) oder Block Copolymere wie Polystyren-*b*-poly(ethylenoxid) (SPE) verwendbar. PEO kann zusätzlich mit einer ionischen Flüssigkeit wie 1-Butyl-1-methylpyrrolidinium-bis((trifluoromethyl)sulfonyl)imid (Pyr₁₄TFSI) oder 1-Ethyl-3-methylimidazolium-bis((trifluoromethyl)sulfonyl)imid (Im₁₂TFSI) kombiniert werden.

Im Falle der Nutzung mit Lithiumanoden sind bevorzugte Leitsalze Lithium-Salze. Bevorzugte Lithiumsalze sind solche, die sich bei erhöhten Temperaturen beispielsweise von 100 °C oder 120 °C nicht zersetzen. In bevorzugten Ausführungsformen ist das Lithiumsalz ausgewählt aus der Gruppe umfassend Lithium-bis(oxalato)borat (LiBOB), LiPF₆, LiBF₄, LiAsF₆, LiClO₄, Lithium-bis(trifluoromethan)sulfonimid (LiN(SO₂CF₃)₂, LiTFSI), Lithium-bis(fluorosulfonyl)imid (LiN(FSO₂)₂, LiFSI), Lithium-difluoro(oxalato)borat (LiDFOB) und/oder Lithium-triflat (LiSO₃CF₃, LiTf). Besonders bevorzugte Lithiumsalze sind ausgewählt aus der Gruppe umfassend LiBOB, LiPF₆, LiBF₄, LiAsF₆, LiClO₄, LiTFSI und/oder LiFSI, insbesondere LiBOB LITFSI, LiPF₆ und LiBF₄.

Bevorzugte Vernetzer sind ausgewählt aus der Gruppe umfassend Benzophenon, Divinylbenzol, welches für Polystyrol eingesetzt wird und polyedrisches oligomeres Silsesquioxan (engl.: Polyhedral Oligomeric Silsesquioxane (POSS), dessen Derivat aminfunktionalisiertes PEO vernetzten kann. Bevorzugte Lösungsmittel sind ausgewählt aus der Gruppe umfassend Tetrahydrofuran (THF), 1,3-Dioxolan (DOL), Acetonitril (ACN) und/oder Adiponitril (ADP).

Ein besonders bevorzugtes Polymer ist Poly[bis((methoxyethoxy)ethoxy)phosphazen], MEEP), ein bevorzugtes Lithium-Salz Lithium bis(oxalato)borat (LiBOB) und ein bevorzugtes Vernetzungsadditiv Benzophenon. Ein bevorzugtes Lösungsmittel ist Tetrahydrofuran (THF).

Der Anteil an Polymer in der Schicht des festen Polymerelektrolyten kann im Bereich von ≥ 10 Gew.-% bis ≤ 90 Gew.-%, vorzugsweise im Bereich von ≥ 15 Gew.-% bis ≤ 85 Gew.-%, bevorzugt im Bereich von ≥ 20 Gew.-% bis ≤ 80 Gew.-%, bezogen auf das Gesamtgewicht des festen Polymerelektrolyten, liegen. Der Anteil an Leitsalz in der Schicht des festen Polymerelektrolyten kann im Bereich von ≥ 6 Gew.-% bis ≤ 20 Gew.-%, vorzugsweise im Bereich von ≥ 8 Gew.-% bis ≤ 16 Gew.-%, bevorzugt im Bereich von ≥ 10 Gew.-% bis ≤ 12 Gew.-%, bezogen auf den Polymeranteil des festen Polymerelektrolyten, liegen. Der Anteil an Vernetzer in der Schicht des festen Polymerelektrolyten kann im Bereich von ≥ 5 Gew.-% bis ≤ 20 Gew.-%, vorzugsweise im Bereich von ≥ 7 Gew.-% bis ≤ 17 Gew.-%, bevorzugt im Bereich von ≥ 10 Gew.-% bis ≤ 15 Gew.-%, bezogen auf den Polymeranteil des festen Polymerelektrolyten, liegen.

In bevorzugten Ausführungsformen bildet der feste Polymerelektrolyt eine Schicht mit einer Schichtdicke in einem Bereich von ≥ 5 µm bis ≤ 150 µm, vorzugsweise von ≥ 15 µm bis ≤ 100 µm, bevorzugt von, ≥ 20 µm bis ≤ 50 µm, aus. Die Angabe der Schichtdicke bezieht sich hierbei auf die Dicke der vom Lösungsmittel befreiten Schicht oberhalb der Oberfläche ohne Berücksichtigung der Tiefe der Ausnehmungen. In anderen Worten bildet der feste Polymerelektrolyt somit eine durchgängige Schicht mit einer Schichtdicke in einem Bereich von ≥ 5 µm bis ≤ 150 µm auf der Oberfläche der Elektrode oder des Stromsammlers aus.

Die Methode für die funktionelle Beschichtung ist in vorteilhafter Weise übertragbar auf andere strukturierte bzw. strukturierbare Metall-Elektroden wie Lithium-Legierungen, Natrium, Magnesium oder Zink und auf Stromsammler, die zumeist aus Kupfer- oder Aluminiumfolie ausgebildet sind. In Ausführungsformen der Elektrode oder des Stromsammlers ist das Metall daher ausgewählt aus der Gruppe umfassend Lithium, Natrium, Kalium, Magnesium, Calcium, Aluminium, Zink, Nickel, Kupfer und/oder Eisen, vorzugsweise Lithium. In bevorzugten Ausführungsformen ist das Metall der Elektrode ausgewählt aus der Gruppe umfassend Lithium, Natrium, Magnesium, Calcium, Zink und/oder Eisen. Metallelektroden weisen eine hohe spezifische Energie auf. Hierbei sind Zink- und insbesondere Lithium- oder Natrium-Elektroden von besonderem kommerziellem Interesse. In einer besonders bevorzugten Ausführungsform ist das Metall Lithium. Lithium ist aufgrund eines geringen Redoxpotentials und einer hohen Kapazität ein sehr bevorzugtes Elektrodenmaterial.

Vor dem Beschichten mit der funktionellen Beschichtung aus Festpolymer-Elektrolyt kann das Metall wie Lithium chemisch modifiziert werden. Dies kann beispielsweise durch Tauchlackierung in Elektrolytadditiven wie 1-Fluoroethylencarbonat (FEC) oder Vinylencarbonat (VC) oder Lithiumnitrat (LiNO₃) in 1,3-Dioxolan (DOL) erfolgen, wodurch eine Schutzschicht, eine so genannte SEI (solid electrolyte interphase) auf dem Metall, insbesondere Lithium ausgebildet werden kann. Ferner kann das Metall, insbesondere Lithium, chemisch modifiziert werden, indem es beispielsweise einer CO₂-Atmosphäre ausgesetzt wird, wodurch sich auf dem Metall eine Carbonatschicht bildet. Diese Arten von Modifikationen können mit den vorgestellten mechanischen Modifikationen und einem nicht-flüssigen Elektrolyten kombiniert werden. In bevorzugten Ausführungsformen ist das Metall Lithium, wobei die strukturierte Lithium-Oberfläche eine chemische Modifizierung aufweist, vorzugsweise ausgewählt aus einer Lithium-Ionen-leitenden Schicht enthaltend Lithium-Carbonat, hergestellt durch Kontaktreaktionen einer Lithium-Oberfläche mit Kohlendioxid, 1-Fluoroethylencarbonat (FEC), Vinylencarbonat (VC) oder Lithiumnitrat (LiNOs) in 1,3-Dioxolan (DOL). Hierdurch kann eine weitere Stabilisierung der Elektrode erzielt werden.

Neben Lithium-Carbonat können ebenfalls Lithiumoxid und Lithiumhydroxid Bestandteil der SEI sein, welches durch Reaktionen mit den verschiedenen Carbonaten oder mit in der Atmosphäre enthaltenen elementaren Sauerstoff entsteht. Ferner können durch Reaktionen mit 1-Fluoroethylencarbonat (FEC) Lithiumfluorid und durch Reaktionen mit Lithiumnitrat oder elementaren Stickstoff Lithiumnitrid generiert werden, die in die SEI eingefügt werden. Weitere chemische Bausteine, die zum Aufbau einer SEI genutzt werden können, sind Metalle und Polymere, so wie andere anorganische Verbindungen, wie Keramiken. Im Speziellen sind legierende Metalle als Komponenten in einer SEI bevorzugt. Weiterhin sind insbesondere Polymere und anorganische Komponenten, die gegenüber der Metallelektrode stabil sind und über Lithiumionen-leitfähigkeit verfügen, bevorzugte Bestandteile einer Schutzschicht.

Die beschichtete, strukturierte Metall-Elektrode kann mit einem nicht-flüssigen Elektrolyten kombiniert werden. Der nicht-flüssige Elektrolyt kann Polymere, Keramiken oder Gläser umfassen, die eine geeignete Metall-Ionen-Leitfähigkeit aufweisen. Die hieraus erhaltene, mit einem festen Polymer-Elektrolyten, Gelpolymer-Elektrolyten, oder einem Mischphasen-/Komposit-Elektrolyten kombinierte, strukturierte und beschichtete Metall-Elektrode ist insbesondere als Anode mit geeigneten Kathodenmaterialien verwendbar.

Ein weiterer Gegenstand der Erfindung betrifft einen primären oder sekundären Energiespeicher, insbesondere elektrochemischer Energiespeicher, umfassend einen erfindungsgemäßen Stromsammler oder eine erfindungsgemäße Metall-Elektrode, einen nicht-flüssigen Elektrolyten und eine Gegenelektrode. Die erfindungsgemäße Metall-Elektrode ist vorzugsweise die negative Elektrode (Anode) und die Gegenelektrode entsprechend die positive Elektrode. Der Energiespeicher ist vorzugsweise ausgewählt aus der Gruppe umfassend Lithium-Metall-Batterie, ein Lithium-Metall-Akkumulator Lithium-Ionen-Akkumulator, Lithium-Polymer-Batterie, Lithium-Ionen-Kondensator, Superkondensator, Hybrid-(Super)-Kondensatoren, Dual-Ionen-Batterie und/oder (Erd-)Alkalimetall-Ionen-Batterie. Bevorzugt sind sekundäre elektrochemische Energiespeicher.

Für die Beschreibung des Stromsammlers und der Elektrode wird auf die vorstehende Beschreibung Bezug genommen. Der Begriff "Energiespeicher" umfasst im Sinne der vorliegenden Erfindung primäre und sekundäre Energiespeichervorrichtungen, also Batterien (Primärspeicher) und Akkumulatoren (Sekundärspeicher). Im allgemeinen Sprachgebrauch werden Akkumulatoren häufig mit dem vielfach als Oberbegriff verwendeten Terminus "Batterie" bezeichnet. So wird der Begriff Lithium-Ionen-Batterie vorliegend synonym zu Lithium-Ionen-Akkumulator verwendet, wenn nicht abweichend angegeben. Der Begriff "elektrochemische Energiespeicher" umfasst im Sinne der vorliegenden Erfindung auch elektrochemische Kondensatoren (englisch: electrochemical capacitors), Doppelschichtkondensatoren (englisch: electrochemical double-layer capacitors), Super- bzw. Ultrakondensatoren (englisch: supercapacitors, ultracapacitors) oder sog. Pseudokondensatoren (englisch: pseudo capacitors). Elektrochemische Kondensatoren, in der Literatur auch als Superkondensatoren bezeichnet, sind elektrochemische Energiespeicher, die sich gegenüber Batterien durch eine höhere Leistungsdichte, gegenüber konventionellen Kondensatoren durch eine höhere Energiedichte auszeichnen.

Hybrid-(Super)-Kondensatoren umfassen eine Kombination aus Leistungsdichte-optimierten und Energiedichte-optimierten Elektroden. Es sind zumeist asymmetrische Kondensatoren. Die Leistungsdichte-optimierte Elektrode zeichnet sich durch vornehmlich Doppelschichtbasierte Kapazität aus und die Energiedichte-optimierte Seite durch sog. Pseudo-Kapazität, die vornehmlich aus Faraday'schen Prozessen herrührt. Ein bevorzugter Hybrid-Superkondensator ist der sog. Lithium-Ionen-Kondensator. Bei diesem kommt auf der negativen Seite ein Lithium-Interkalations-Material zum Einsatz und auf der positiven Seite eine Aktivkohle-Elektrode. Ein Hybrid-Superkondensator ist somit ein Hybrid aus Batterie-und Kondensator-Technologie.

Elektrochemische Energiespeicher können galvanischen Zellen mit einer Metallelektrode sein, beispielsweise Metall-Luft-, Metall-Schwefel- oder Metall-Sauerstoff-Batterien oder - Akkumulatoren, oder (Erd-)Alkalimetall-Ionen-Akkumulatoren oder Superkondensatoren sein. Bevorzugt sind auf Lithium basierende Energiespeicher. Lithium-basierte Energiespeicher sind vorzugsweise ausgewählt aus der Gruppe umfassend Lithium-Batterien, Lithium-Luft-Batterien, Lithium-Schwefel-Batterien, Lithium-Metall-Akkumulatoren, Lithium-Ionen-Akkumulatoren, Lithium-Polymer-Batterien oder Lithium-Ionen-Kondensatoren. Bevorzugt sind Lithium-Luft-Batterien, Lithium-Schwefel-Batterien und Lithium-Metall-Akkumulatoren. Die modifizierte und beschichtete Metallelektrode ist insbesondere für Lithium-Metall-Akkumulatoren geeignet. In bevorzugten Ausführungsformen ist die erfindungsgemäße Elektrode eine Anode. Unter dem Begriff "Anode" wird im Sinne der vorliegenden Erfindung die negative Elektrode verstanden, auf der sich metallisches Lithium abscheidet.

In einer Lithium-Batterie oder einem Lithium-Ionen-Akkumulator kann die oben beschriebene Elektrode als negative Elektrode verwendet werden. Für die positive Elektrode kann als Aktivmaterial ein Lithium-haltiges Metalloxid oder Lithium-haltiges Metallphosphat, wie Lithium-Nickel-Mangan-Kobalt-Mischoxide (NMC), Lithium-KobaltOxid (LCO), Lithium-Nickel-Oxid (LNO), Lithium-Nickel-Kobalt-Aluminium-Mischoxide (NCA), Lithium-Nickel-Mangan-Mischoxide (LNMO), Lithium-Eisenphosphat (LFP), Lithium-Eisen-Mangan-Phosphat (LFMP), Lithium- und Nickel-reiche Schichtoxide (englisch: Li-rich or Ni-rich layered oxide), das auf eine Kupfer- oder Aluminiumfolie oder einem Metallgitter oder Kohlenstoffflies als Stromsammler aufgebracht ist, verwendet werden. Der Begriff "Aktivmaterial" bezeichnet im Sinne der vorliegenden Erfindung ein Material, das Metall- insbesondere Lithium-Ionen reversibel aufnehmen und abgeben kann, ein Vorgang, der als "Insertion" oder "Interkalation" bezeichnet wird. Das Aktivmaterial nimmt somit "aktiv" an den beim Laden und Entladen auftretenden elektrochemischen Reaktionen teil, im Gegensatz zu anderen möglichen Bestandteilen einer Elektrode wie Bindemittel, leitfähiger Kohlenstoff oder der Stromsammler. Weiterhin kann das Aktivmaterial ein Anionen-aufnehmendes Material sein, wie Graphit oder organische p-typ Materialien. Darüber hinaus sind als positive Elektrode auch Konversionsmaterialien wie Schwefel oder Sauerstoff/Luft verwendbar.

Ein elektrochemischer Energiespeicher insbesondere eine Lithium- oder Lithium-Metall-Batterie enthaltend eine erfindungsgemäße Elektrode kann eine deutlich verringerte Abscheidespannung bzw. Abscheidewiderstand zur Verfügung stellen. Weiterhin kann eine deutliche Verminderung des Zellwiderstands zur Verfügung gestellt werden. Insbesondere in Verbindung mit der Verwendung eines nicht-flüssigen Elektrolyten kann weiterhin die Sicherheit der Verwendung erhöht werden.

Als nicht flüssigen Elektrolyten sind vorzugsweise drei Elektrolyttypen verwendbar: Festpolymer-Elektrolyte, Gel-Polymer-Elektrolyte und als Hybrid-Elektrolyte bezeichnete Mischelektrolyte aus Polymer- und Keramik-Elektrolyt. In bevorzugten Ausführungsformen umfasst der nicht-flüssige Elektrolyt einen festen Polymer-Elektrolyten, einen Gelpolymer-Elektrolyten, oder einen Komposit-Elektrolyten umfassend eine mehrschichtige Anordnung aus einem Lithiumionen-leitenden keramischen, glasartigen oder glaskeramischen Festelektrolyten, der auf gegenüberliegenden Oberflächen mit einem Gelpolymer-Elektrolyten oder einem festen Polymer-Elektrolyten beschichtet ist.

Diese Typen nicht-flüssiger Elektrolyte stellen eine verbesserte Nutzbarkeit von Lithium-Metall wie auch eine höhere Sicherheit zur Verfügung. Die verschiedenen Elektrolytsysteme weisen dabei jeweils Vorteile für verschiedene Anwendungen auf. Festpolymer-Elektrolyte sind in einem flexiblen Aufbau verwendbar, beispielsweise in einem Pouch-Setup. Festpolymer-Elektrolyte sind bevorzugt in einem Temperaturbereich von 30 - 80 °C verwendbar. Von Vorteil ist, dass keine organischen Lösungsmittel verwendet werden und damit eine deutlich erhöhte Sicherheit zur Verfügung gestellt werden kann.

Unter dem Begriff "Gel-Polymerelektrolyt" wird ein Elektrolyt verstanden, bei dem ein flüssigförmiger Elektrolyt in einer Polymermatrix als ein insgesamt gelartiger Elektrolyt vorliegt. Der flüssige Elektrolyt kann ein herkömmlicher auf wässrigen oder organischen Lösungsmitteln basierter Elektrolyt sein, umfassend ein Metall-Salz, vorzugsweise ein Lithium-Salz wie LiBOB, LiPF₆, LiBF₄, LiFSI, LiTFSI, LiClO₄, LiDFOB gelöst in einem organischen Carbonat, Nitril, Dinitril, Ether, Glykol, einer ionischen Flüssigkeit oder deren Mischungen, wobei der Elektrolyt weiterhin bekannte Elektrolytadditive enthalten kann. Auch Gel-Polymerelektrolyte sind in flexiblen Aufbauten wie einem Pouch-Setup verwendbar. Gel-Polymerelektrolyte sind bevorzugt in einem Temperaturbereich von 0 - 50 °C verwendbar. Von Vorteil ist auch in diesem Fall, dass eine erhöhte Sicherheit durch den nicht-flüssigen Aufbau zur Verfügung gestellt werden kann, da der Anteil an organischem oder wässrigen Lösungsmittel in der Gel-Membran eingeschlossen ist.

So genannte Hybrid-Elektrolyte ausgebildet aus einem anorganischen Elektrolyten und einem Polymer sind insbesondere für Hochtemperaturanwendungen in einem Bereich von 40 - 100 °C verwendbar. Hybrid-Elektrolyte mit hohem Anteile an Keramiken sind vor allem geeignet für Systeme mit steifem Gehäuse wie Knopfzellen. Durch lediglich geringe Anteile an organischen bzw. polymerischen Komponenten können Hybrid-Elektrolyte eine besonders hohe Sicherheit zur Verfügung stellen.

Zur Herstellung einer Zelle mit Festpolymer-Elektrolyten wird eine strukturierte und beschichtete Lithium-Elektrode mit einer Festpolymer-Elektrolyt-Membran versehen. Im Falle einer symmetrischen Lithium-Lithium-Zelle kann eine Festpolymer-Elektrolyt-Membran zwischen zwei Lithium-Elektroden angeordnet werden. Unter dem Begriff "Membran" ist im Sinne der vorliegenden Erfindung eine dünne Schicht, beispielsweise eines Polymerelektrolyten, zu verstehen. Die Dicke der Polymermembran kann in einem Bereich von ≥ 10 µm bis ≤ 150 µm, vorzugsweise von ≥ 15 µm bis ≤ 100 µm, bevorzugt von ≥ 20 µm bis ≤ 50 µm, liegen. In Ausführungsformen kann der Festpolymer-Elektrolyt zwischen den Elektroden bzw. die Festpolymer-Elektrolyt-Membran über die Beschichtung der strukturierten Oberfläche mit festem Polymerelektrolyten zur Verfügung gestellt werden. In anderen Ausführungsformen kann zusätzlich eine weitere Festpolymer-Elektrolyt-Membran zur Erhöhung der Schichtdicke zwischen den Elektroden angeordnet werden.

Als Polymere und Leitsalze sind vorzugsweise die Polymere und Leitsalze verwendbar, die für die funktionelle Beschichtung der Elektrode Verwendung finden. Diesbezüglich wird für die Beschreibung der Polymere, Leitsalze und Vernetzer auf die vorstehende Beschreibung verwiesen. Bevorzugte Polymere sind ausgewählt aus der Gruppe umfassend MEEP, Poly((oligo)oxethylen)methacrylat-co-Alkalimetall-methacrylat, MEE-*co*-BF₃LiP, PEO, PEGDME, SPE, PVdF, PVdF-HFP, PAN, Polyester, Polypropylenoxid, Ethylenoxid/Propylenoxid Copolymer, PMMA, PMAN, Polysiloxan, Poly(chlorotrifluoro-ethylen), Poly(ethylen-chlorotrifluoro-ethylen) sowie deren Mischungen. Bevorzugte Leitsalze sind ausgewählt aus der Gruppe umfassend LiBOB, LiPF₆, LiBF₄, LiAsF₆, LiClO₄, LiTFSI, LiFSI, LiDFOB und/oder LiTf. Besondere bevorzugt für einen Festpolymer-Elektrolyten ist eine vernetzte Mischung aus MEEP-Polymer und LiBOB-Salz. Die Festpolymerelektrolyt-Membran kann durch UV-induzierte Vernetzung unter Verwendung eines UV-sensitiven Vernetzers einer Mischung des Polymers und des Lithiumsalzes erhalten werden.

In einer Zelle mit Gel-Polymer-Elektrolyt wird auf einer strukturierten und beschichteten Lithium-Elektrode eine Gelpolymer-Elektrolyt-Membran angeordnet. Im Falle einer symmetrischen Lithium-Zelle kann der Gelpolymer- Elektrolyt zwischen zwei Lithium-Elektroden angeordnet werden. Die Dicke der Gel-Polymerschicht kann in einem Bereich von ≥ 10 µm bis ≤ 150 µm, vorzugsweise von ≥ 15 µm bis ≤ 100 µm, bevorzugt von ≥ 20 µm bis ≤ 50 µm, liegen. Als Polymere und Leitsalze sind vorzugsweise die Polymere und Leitsalze verwendbar, die für die funktionelle Beschichtung der Elektrode Verwendung finden. Diesbezüglich wird für die Beschreibung der Polymere, Leitsalze und Vernetzer auf die vorstehende Beschreibung verwiesen. Bevorzugte Leitsalze für einen Gel-Polymer-Elektrolyten sind ausgewählt aus LiBOB, LiPF₆, LiBF₄, LiAsF₆, LiClO₄, LiTFSI und LiFSI.

Zur Herstellung einer Zelle mit Gel-Polymer-Elektrolyt kann eine Festpolymer-Elektrolyt-Membran, beispielsweise eine vernetzte Mischung aus MEEP-Polymer und LiBOB-Salz, auf der strukturierten und beschichteten Lithium-Elektrode angeordnet werden. Zu dieser kann in einem folgenden Schritt ein flüssigförmiger Elektrolyt gegeben werden. Bei der Benetzung des Festpolymers mit dem flüssigen Elektrolyten findet eine Gel-Formation statt und resultiert in einem Leckage-freien Elektrolyten, der somit einen nicht-flüssigen Elektrolyten ausbildet. In weiteren Ausführungsformen zur Herstellung einer Zelle mit Gel-Polymer-Elektrolyt kann flüssigförmiger Elektrolyt auf wenigstens eine strukturierte und mit Festpolymer-Elektrolyt beschichtete Lithium-Elektrode gegeben und diese ohne zusätzliche Festpolymer-Elektrolyt-Membran einer weiteren strukturierten und mit Festpolymer-Elektrolyt beschichteten Lithium-Elektrode angeordnet werden.

Als Lösungsmittel sind organische Lösemittel, insbesondere zyklische oder lineare Carbonate, Ether, Ethylenglycoldimethylether, Nitrile, Dinitrile, sowie ionische Flüssigkeiten bevorzugt. Bevorzugt ist das organische Lösungsmittel ausgewählt aus der Gruppe umfassend Ethylencarbonat (EC), Ethylmethylcarbonat (DMC), Propylencarbonat, Dimethylcarbonat, Diethylcarbonat, Acetonitril, Propionitril, 3-Methoxypropionitril, Glutaronitril, Adiponitril, Pimelonitril, gamma-Butyrolacton, gamma-Valerolacton, Dimethoxyethan, 1,3-Dioxolan, Ethylenglycoldimethylether, fluorierte zyklische oder lineare Carbonate, Ether, ionische Flüssigkeiten wie Pyr₁₄TFSI und/oder deren Mischungen. Bevorzugt ist das Lösungsmittel ausgewählt aus der Gruppe umfassend Ethylencarbonat, Ethylmethylcarbonat, Dimethylcarbonat, Diethylcarbonat und/oder deren Mischungen. Als Lösungsmittel für die Gelierung sind beispielsweise Kombinationen wie EC:DMC (im Massenverhältnis von 1:1), EC:DEC (3:7) oder EC:EMC (1:1) verwendbar. Zur Herstellung eines Gel-Polymer-Elektrolyten kann beispielsweise während des Zellbaus flüssiger Elektrolyt enthaltend 0,7 M LiBOB in EC:DMC (1:1 Gew.-%) im Massenverhältnis von 1:1 zu dem festen Polymer-Elektrolyten zugegeben werden.

Unter dem Begriff "Komposit" im Sinne der vorliegenden Erfindung ist ein Verbundwerkstoff aus zwei oder mehr Materialien zu verstehen. Unter einem "Hybrid-Elektrolyt" ist entsprechend ein Elektrolyt zu verstehen, der aus zwei oder mehr verbundenen Materialien ausgebildet ist. Unter dem Begriff "Glaskeramik" ist im Sinne der vorliegenden Erfindung ein Werkstoff zu verstehen, der ausgehend von einem schmelztechnologisch hergestellten Ausgangsglas durch gezielte Temperaturbehandlung kontrolliert in eine Glaskeramik umfassend eine Glasphase und eine Kristallphase umgewandelt wird.

Materialien sind insbesondere ausgewählt aus der Gruppe umfassend Lithium-Ionen-leitende keramische, glasartige oder glaskeramische Festelektrolyte, Polymere und Lithium-Salze. Bevorzugte Glaskeramiken sind Lithium-Verbindungen, die eine zu NASICON (NAtrium Super Ionic CONductor, Natrium-Superionenleiter) ähnliche Struktur aufweisen. Unter "glasartigen" Elektrolyten werden Materialien wie Lithiumphosphat (LIPON) und Li₂S-basierte Oxysulfidgläser verstanden.

Zur Herstellung einer Zelle mit einem Hybrid- oder Komposit-Elektrolyten wird auf einer strukturierten und beschichteten Lithium-Elektrode eine mehrschichtige Anordnung aus einem Lithiumionen-leitenden keramischen, glasartigen oder glaskeramischen Festelektrolyten, der auf gegenüberliegenden Oberflächen mit einem Gelpolymer-Elektrolyten oder einem festen Polymer-Elektrolyten beschichtet ist, angeordnet. Die mehrschichtige Anordnung kann beispielsweise einen Polymer-beschichtetem Festkörperelektrolyt-Pressling umfassen. Der Festkörperelektrolyt-Pressling, beispielsweise ein Pellet, kann beispielsweise aus LLZO-Material (Li_{6,6}La₃Zr_{1,6}Ta_{0,4}O₁₂) ausgebildet sein. Das Pellet kann wie in Bezug auf die funktionelle Beschichtung der Lithium-Elektroden beschrieben von den beiden Seiten mit einer Festpolymer-Elektrolyt-Mischung, beispielsweise MEEP, LiBOB und Benzophenon in THF gelöst, beschichtet und nach dem Trocknen unter UV-Licht vernetzt werden. Um eine mehrschichtige Anordnung mit Gel-Polymer-Elektrolyten zu generieren, kann die Festpolymer-Elektrolyt-Schicht mit flüssigförmigem Elektrolyten geliert werden.

In bevorzugten Ausführungsformen sind:
- der keramische Festelektrolyt ausgewählt aus der Gruppe umfassend Lithium-Lanthan-Zirkonat (LLZO) stabilisiert in kubischer Kristallstruktur durch Substitution mit Ta⁵⁺, Nb⁵⁺, Te⁵⁺ oder W⁶⁺ auf dem Zr⁴⁺-Gitterplatz und/oder Al³⁺ oder Ga³⁺ auf dem Li⁺-Gitterplatz, Lithium-Lanthan-Tantal-Zirkonat Li_{6,75}La₃Zr_{1,75}Ta_{0,4}O₁₂ (LLZTO), Lithium-Lanthan-Titanat (La,Li)TiO₃ (LLTO), und/oder Lithium-Aluminium-Germanium-Phosphat Li₁₊ₓAl_{y}Ge_{2-y}(PO₄)₃ (LAGP) wobei 0,3 x <0,6 und 0,3 y <0,5;
- der glasartige Festelektrolyt ausgewählt aus der Gruppe umfassend Lithiumphosphat (LIPON) und/oder Sulfid-basierte Festelektrolyte ausgewählt aus der Gruppe umfassend Li₂S-P₂S₅, Li₃PS₄ (LPS), Li₂S-GeS₂, Li₂S-GeS₂-P₂S₅, Li2S-GeS₂-ZnS, Li₂S-Ga₂S₃, Li₂S-GeS₂-Ga₂S₃, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-LiI, Li₂S-SiS₂-Li₄SiO₄, Li₂S-SiS₂-Li₃PO₄, Li₂SO₄-Li₂O-B₂O₃ und Li₂S-GeS₂-P₂S₅ (LGPS) vorzugsweise Li₁₀GeP₂S₁₂; und/oder
- der glaskeramische Festelektrolyt ausgewählt aus der Gruppe umfassend zu NASICON isostrukturelle Lithium-Verbindungen der Summenformel Li_{1+x-y}M^{V}_{y}M^{III}ₓM^{IV}_{2-x-y}(PO₄)₃, wobei 0 ≤ x <1, 0 ≤ y <1 und (1+x-y) > 1 und M^{III} ein dreiwertiges Kation, M^{IV} ein vierwertiges Kation und M^{V} ein fünfwertiges Kation ist (LATP), insbesondere Li₁₊ₓAlₓTi₂₋ₓ(PO₄)₃, Li₇P₃S₁₁ und/oder Li₇P₂S₈I.

Für zu NASICON isostrukturelle Lithium-Verbindung der Summenformel Li_{1+x-y}M^{V}_{y}M^{III}ₓM^{IV}_{2-x-y}(PO₄)₃ ist M^{V} vorzugsweise ausgewählt aus Ta⁵⁺ und/oder Nb⁵⁺ , M^{III} vorzugsweise ausgewählt aus Al³⁺, Cr³⁺, Ga³⁺ und/oder Fe³⁺, und/oder M^{IV} vorzugsweise ausgewählt aus Ti⁴⁺, Zr⁴⁺ und/oder Si⁴⁺. Eine bevorzugte zu NASICON isostrukturelle Lithium-Verbindung ist beispielsweise Lithium-Aluminium-Titan-Phosphat (LATP), insbesondere Li₁₊ₓAlₓTi₂₋ₓ(PO₄)₃) wie Li_{1,4}Al₀,₄Ti_{1,6}(PO₄)₃, der als gesintertes Substrat eine Ionenleitfähigkeit von 6•10⁻³ S/cm aufweisen kann.

Bevorzugt sind keramische Festelektrolyte wie Lithium-Lanthan-Zirkonate (LLZO), stabilisiert in kubischer Kristallstruktur durch Substitution mit Ta⁵⁺,Nb⁵⁺,Te⁵⁺ oder W⁶⁺ auf dem Zr⁴⁺-Gitterplatz und/oder Al³⁺ oder Ga³⁺ auf dem Li⁺-Gitterplatz, beispielsweise Li_{6,6}La₃Zr_{1,6}Ta_{0,4}O₁₂. Vorzugsweise liegt der Anteil der Substitution hierbei im Bereich von 0,4 - 0,5 pro Formel-Einheit und/oder der Anteil an Lithium-Ionen pro Formel-Einheit liegt bei ≥ 6,5. Dies kann zu einer hohen Leitfähigkeit beitragen. Vorteil der LLZO-Keramik liegt darin, dass diese stabil gegenüber Lithiummetall sind. In vorteilhafter Weise weisen LLZO-Keramiken mit kubischer Granat-Struktur eine hohe Lithium-Ionen-Leitfähigkeit auf. Ein Vorteil der LLZO-Keramik liegt darin, dass diese stabil gegenüber Lithiummetall sind. In vorteilhafter Weise weisen LLZO-Keramiken eine hohe Lithium-Ionen- Leitfähigkeit auf. Eine bevorzugte (La,Li)TiO₃ (LLTO)-Keramik ist La_{0,57}Li_{0,33}TiO₃. Eine bevorzugte Li₁₊ₓAl_{y}Ge_{2-y}(PO₄)₃ (LAGP)-Keramik ist Li_{1,5}Al_{0,5}Ge_{1,5}(PO₄)₃.

Die Ausnehmungen der Metall-Elektrode können durch Umformverfahren in das Metall, beispielsweise Lithium, eingebracht werden. Die Ausnehmungen können beispielsweise mittels Walzen insbesondere Kalanderwalzen oder einem Prägeverfahren ausgebildet werden. Eine Walze, die eine entsprechend den Ausnehmungen positiv strukturierte Oberfläche aufweist, kann die Ausnehmungen in eine Metallfolie gewünschter Dicke einbringen. Entsprechende Walzen für eine großtechnische Fertigung sind erhältlich. Insbesondere geeignet sind großflächig mikrostrukturierte Prägewalzen. Eine Verwendung von mikrostrukturierten Walzen mit großem Durchmesser ermöglicht ein schnelles und endloses Abprägen der Strukturen bzw. Ausnehmungen. Alternativ kann eine als Elektrode verwendbare Metallfolie auch per Hand geprägt werden. Der Walz- oder Prägevorgang kann abhängig von der gewünschten Dichte oder Anzahl der Ausnehmungen wiederholt werden. In vorteilhafter Weise weist das Verfahren das Potential für eine Hochskalierung bis zum industriellen Maßstab auf.

Ein weiterer Gegenstand der Erfindung betrifft daher ein Verfahren zur Herstellung einer erfindungsgemäßen Metall-Elektrode oder eines Stromsammlers für einen Energiespeicher, wobei man die Strukturierung der Metall-Oberfläche mit Ausnehmungen durch ein Rolle-zu-Rolle-Verfahren durchführt. Die Oberfläche der Elektrode oder des Stromsammlers umfasst eine Mehrzahl von zueinander beabstandeten, Sackloch-artigen Ausnehmungen, und die derart strukturierte Oberfläche ist mit einem festen Polymerelektrolyten beschichtet, wobei die Ausnehmungen mit dem festen Polymerelektrolyten gefüllt sind. Für die Beschreibung der Elektrode und des Stromsammlers wird auf die vorstehende Beschreibung Bezug genommen.

Bei Rolle-zu-Rolle-Verfahren (engl. Reel-to-Reel- oder Roll-to-Roll-Verfahren (R2R) befindet sich das Ausgangsmaterial auf einer Folienrolle, wird abgerollt, bearbeitet und als fertiges Produkt wieder aufgerollt. Somit lassen sich große Stückzahlen kostengünstig, sicher und problemlos verarbeiten. Ferner können für einen Rolle-zu-Rolle-Prozess Rollen mit entsprechender Spitzenstrukturierung gestaltet werden. Derartige Verfahren erlauben großtechnisch oder händisch ein ökonomisches und effizientes Verfahren, das einen großen Oberflächenbereich durch einen einfachen Rollvorgang abdecken kann. Insbesondere Ausnehmungen mit einer Dimensionierung im Mikrometer-Bereich, beispielsweise einer Länge, Breite und/oder Tiefe in einem Bereich von ≥ 100 µm bis ≤ 800 µm, lassen sich mittels Rolle-zu-Rolle-Verfahren industriell gut umsetzen.

Der Druck beim Pressen oder Walzen des Lithiums kann in einem Bereich von ≥ 5 bar bis ≤ 30 bar, vorzugsweise von ≥ 7 bar bis ≤ 20 bar, bevorzugt von ≥ 10 bar bis ≤ 15 bar, liegen.

In einem weiteren Schritt des Verfahrens kann die strukturierte Oberfläche, insbesondere eine Lithium-Oberfläche, mit einem festen Elektrolyten beschichtet werden. Durch eine Beschichtung mit einem festen Polymerelektrolyten kann die vergrößerte Oberfläche der Elektrode oder des Stromsammlers vollständig für elektrochemische Vorgänge genutzt werden. Vorzugsweise wird hierfür eine funktionelle Beschichtungsmethode eingesetzt.

Die Beschichtung kann insbesondere durch eine Sprühbeschichtung aufgebracht werden, wobei zunächst eine Mischung oder Beschichtungslösung enthaltend ein geeignetes Polymer, wie MEEP, ein Lithium-Salz, wie LiBOB, und ein durch ultraviolette Strahlung (UV) aktivierbares Vernetzungsadditiv, wie Benzophenon, in einem geeigneten Lösungsmittel, wie THF, hergestellt wird. Diese Mischung kann dann auf die strukturierte Oberfläche, vorzugsweise eine Lithium-Oberfläche, beispielsweise mittel Drop Coating aufgebracht werden. Durch eine Beschichtung mit einer Lösung kann eine homogene Beschichtung ausgebildet werden. Alternativ zu THF als Lösungsmittel für das Drop Coating können 1,3-Dioxolan (DOL), Acetonitril (ACN) oder Adiponitril (ADP) verwendet werden. Die Konzentration der Bestandteile der Beschichtungsmischung wie Polymer, Lithium-Salz und Vernetzungsadditiv im Lösungsmittel kann hierbei in einem Bereich von ≥ 0,15 mg/µL bis ≤ 1 mg/µL, vorzugsweise von ≥ 0,2 mg/µL bis ≤ 0,75 mg/µL, bevorzugt von ≥ 0,3 mg/µL bis ≤ 0,5 mg/µL, liegen.

Die aufgebrachte Beschichtungsmischung auf der Oberfläche der Lithium-Elektrode kann bei einer erhöhten Temperatur getrocknet werden, so dass das Lösungsmittel evaporiert. Die Trocknungstemperatur für die Beschichtung kann hierbei in einem Bereich von ≥ 50 °C bis ≤ 80 °C, vorzugsweise von ≥ 55 °C bis ≤ 75 °C, bevorzugt von ≥ 70 °C bis ≤ 70 °C, liegen.

Anschließend wird die getrocknete Elektrode vorzugsweise mit UV-Licht bestrahlt, wobei das Polymer vernetzt. Hierdurch kann eine stabile Beschichtung ausgebildet werden. Mittels dieser Methode kann eine dünne Schicht aus Polymerelektrolyt auf die strukturierte Lithium-Elektrode aufgebracht werden, so dass die Schicht dem Oberflächenmuster folgt und dadurch die gesamte Oberfläche benetzt. Belichtungszeit zur Vernetzung des Polymers kann hierbei in einem Bereich von ≥ 11 Minuten bis ≤ 25 Minuten, vorzugsweise von ≥ 13 Minuten bis ≤ 20 Minuten, bevorzugt von ≥ 15 Minuten bis ≤ 18 Minuten, liegen.

In vorteilhafter Weise können für die Strukturierung einfach umsetzbare Rolle-zu-Rolle-Verfahren genutzt werden, während die Beschichtung mittels einfacher Beschichtungstechniken aufbringbar ist. Die Bearbeitung der Elektrode bzw. des Stromsammlers, lässt sich somit auf industriell genutzte Systeme übertragen.

Beispiele und Figuren, die der Veranschaulichung der vorliegenden Erfindung dienen, sind nachstehend angegeben.

Hierbei zeigen die Figuren:
- Figur 1: eine schematische Darstellung der Herstellung bzw. eines Prozesses zur Herstellung einer strukturierten, chemisch modifizierten Metall-Elektrode mit funktioneller Beschichtung gemäß einer Ausführungsform der Erfindung.
- Figur 2: Mechanisch modifizierte Lithium Metall Elektroden, wobei bei Figur 2a) ein Stempel mit Quadern im Abstand von 1000 µm und bei Figur 2b) ein Stempel mit Quadern im Abstand von 500 µm verwendet wurde.
- Figur 3: in Figur 3a) eine REM-Aufnahme einer strukturierten und beschichteten Lithium-Elektrode, und in Figur 3b) eine EDS-Analyse für Kohlenstoff.
- Figur 4: Zellaufbauten von Energiespeichern mit einer Lithium-Elektrode mit strukturierter Oberfläche beschichtet mit einem festen Polymerelektrolyten sowie nicht-flüssigen Elektrolyten gemäß verschiedenen Ausführungsformen der Erfindung als Li/Li symmetrische Zellen.
- Figur 5: in Figur 5a) und c) eine Nyquist Darstellung für eine strukturierte Lithium-Elektrode mit Festpolymer-Elektrolyt ("Modifiziert (56%)", Quadrate) und einer Vergleichszelle mit nicht-strukturierten Lithium-Elektroden ("Unbehandelt", Sternchen) sowie in Figur 5b) und d) die entsprechenden Potentialprofile, gemessen bei 20°C oder 60°C.
- Figur 6: in Figur 6a) eine Nyquist Darstellung für eine strukturierte Lithium-Elektrode mit Gel-Polymer-Elektrolyt ("Modifiziert (56%)" Quadrate) und einer Vergleichszelle mit nicht-strukturierten Lithium-Elektroden ("Unbehandelt", Sternchen) sowie in Figur 6b) die entsprechenden Potentialprofile.
- Figur 7: in Figur 7a) eine Nyquist Darstellung für eine strukturierte Lithium-Elektrode mit Hybrid-Elektrolyt ("Modifiziert (56%)" Quadrate) und einer Vergleichszelle mit nicht-strukturierten Lithium-Elektroden ("Unbehandelt", Sternchen) sowie in Figur 7b) die entsprechenden Potentialprofile.
- Figur 8: in Figur 8a) Ergebnisse des Lithium Abscheidungs-Auflösungs-Experiments und Figur 8b) die zeitliche Entwicklung des komplexen Zellwiderstandes im Leerlauf für einen symmetrischen Knopfzellaufbau mit strukturierten Lithiumelektroden, die in CO₂ Atmosphäre gelagert wurden, und für Vergleichszellen.
- Figur 9: in Figur 9a) Ergebnisse des Lithium Abscheidungs-Auflösungs-Experiments und Figur 9b) die zeitliche Entwicklung des komplexen Zellwiderstandes im Leerlauf für einen symmetrischen Knopfzellaufbau mit strukturierten Lithiumelektroden, die in FEC gelagert wurden, und für Vergleichszellen.
- Figur 10: in Figur 10a) Ergebnisse des Lithium Abscheidungs-Auflösungs-Experiments und Figur 10b) die zeitliche Entwicklung des komplexen Zellwiderstandes im Leerlauf für einen symmetrischen Knopfzellaufbau mit strukturierten Lithiumelektroden, die in LiNO₃ in DOL gelagert wurden, und für Vergleichszellen.
- Figur 11: in Figur 11a) Ergebnisse des Lithium Abscheidungs-Auflösungs-Experiments und Figur 11b) die zeitliche Entwicklung des komplexen Zellwiderstandes im Leerlauf für einen symmetrischen Knopfzellaufbau mit strukturierten Lithiumelektroden, die in VC gelagert wurden, und für Vergleichszellen.
- Figur 12: Zellaufbauten von Energiespeichern mit einer Lithium-Elektrode mit strukturierter Oberfläche beschichtet mit einem festen Polymerelektrolyten mit bzw. ohne zusätzliche Polymerelektrolytmembran als Li/Li symmetrische Zellen.
- Figur 13: eine Nyquist Darstellung für strukturierte Lithium-Elektroden mit Festpolymer-Elektrolyt mit bzw. ohne zusätzliche Polymerelektrolytmembran.
- Figur 14: Nyquist-Darstellung symmetrischer Zellen mit festem Polymerelektrolyt für verschiedene Elektrodendicken und Tiefen der Ausnehmungen gegen unstrukturierte Kontrollen.
- Figur 15: Nyquist-Darstellung symmetrischer Zellen mit festem Polymerelektrolyt für verschiedene Elektrodendicken und Tiefen der Ausnehmungen.
- Figur 16: Potentialprofile bei 60 °C und einer Stromdichte von 0,075 mA/cm² für strukturierte Lithium-Elektroden mit Festpolymer-Elektrolyt und nicht strukturierte Vergleichszellen.
- Figur 17: in Figur 17a) eine REM-Aufnahme einer Ausnehmung einer Tiefe von 150 µm in einer 300 µm dicken Lithiummetallelektrode, und in Figur 17b) einen vergrößerten Ausschnitt.

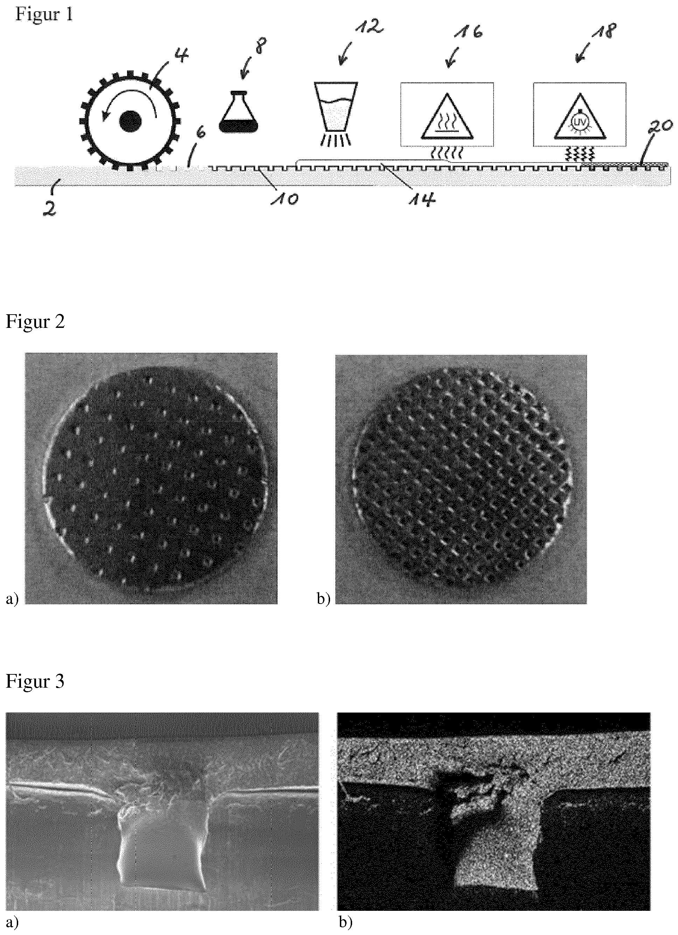

Die Figur 1 zeigt eine schematische Ansicht der Verfahrensschritte der Herstellung einer strukturierten, chemisch modifizierten Metall-Elektrode mit funktioneller Beschichtung gemäß einer Ausführungsform der Erfindung. Eine Metall-Folie 2, beispielsweise Lithium, wird in einem ersten Schritt mittels einer Walze 4, beispielsweise durch ein Rolle-zu-Rolle-Verfahren, mit einer Mehrzahl von zueinander beabstandeten, Sackloch-artigen Ausnehmungen 6 versehen. Die derart strukturierte Oberfläche wird in einem folgenden Schritt einer chemischen Modifizierung 8 unterworfen, wobei durch Kontaktreaktionen der Lithium-Oberfläche beispielsweise mit Kohlendioxid oder 1-Fluoroethylencarbonat eine Lithium-Ionen-leitende Lithiumcarbonat-Schicht 10 auf der strukturierten Oberfläche ausgebildet wird. In einem nachfolgenden Schritt wird auf die strukturierte Lithium-Oberfläche mittels Sprühbeschichtung 12, eine Beschichtungslösung 14 enthaltend ein Polymer, ein Lithium-Salz und ein durch ultraviolette Strahlung (UV) aktivierbares Vernetzungsadditiv in einem Lösungsmittel, beispielsweise MEEP, LiBOB und Benzophenon in THF, aufgebracht. In einem nachfolgenden Schritt wird das Lösungsmittel mittels Trocknung 16 entfernt. Anschließend wird die getrocknete Beschichtung mit UV-Licht 18 bestrahlt, wobei das Polymer vernetzt. Hierdurch ist die strukturierte Oberfläche mit einem festen Polymerelektrolyten 20 beschichtet, wobei die Ausnehmungen 6 mit dem festen Polymerelektrolyten 20 gefüllt sind.

### Beispiel 1

### Herstellung strukturierter Lithium-Elektroden mit funktioneller Beschichtung

### 1.1 Strukturierung

Lithiumfolie wurde mittels Pressen eines Stempels auf die Lithium-Oberfläche strukturiert. Da Lithium eine hohe Reaktivität mit Wasser aufweist, wurde in einer Glovebox unter Argonatmosphäre oder in einem Trockenraum mit entwässerter Luft gearbeitet. Es wurde 19 mm breite und 500 µm dicke Lithiummetallstreifen (Albemarle, Dicke 500 µm, Reinheit Battery Grade) für die Anfertigung der Elektroden verwendet. Diese wurden mit aus Polyoxymethylen (POM) gefertigten Stempeln bearbeitet, welche mit regelmäßig angeordneten kleinen Quadern der Maße 300 µm x 300 µm x 300 µm versehen waren. Der Stempel wurde auf dem Lithiumstreifen platziert, sodass die Quader in Richtung des Lithiums zeigten. Von oben wurde nun mit einer hydraulischen Presse für vier bis fünf Sekunden ein Druck von 15 bar ausgeübt, sodass die Quader Eindrücke in dem weichen Metall hinterließen. Es wurden zwei Stempel verwendet, die sich im Abstand der einzelnen Quader zueinander von 1000 µm (Stempel 1) und 500 µm (Stempel 2) unterschieden, sodass je nach verwendetem Stempel die Dichte der Defekte auf dem Lithium unterschiedlich war und somit die Oberfläche unterschiedlich vergrößert wurde. Aus den modifizierten Lithiummetallstreifen wurden anschließend kreisrunde Elektroden mit einem Durchmesser von 12 mm ausgestanzt.

Figur 2a) zeigt eine Lithium-Metall-Elektrode, die mit einem Stempel mit Quadern im Abstand von 1000 µm (Stempel 1) mechanisch strukturiert wurde, Figur 2b) zeigt eine Lithium-Metall-Elektrode, die mit einem Stempel mit Quadern im Abstand von 500 µm (Stempel 2) mechanisch strukturiert wurde. Durch die Strukturierung wurde die gesamte Oberfläche der Lithium-Elektrode bei einem Abstand von 1000 µm um 20% und bei einem Abstand von 500 µm um 56%, bezogen auf die plane Oberfläche, erhöht.

### 1.2 Beschichtung

Die strukturierte Lithium-Oberfläche wurde anschließend mit einem festen Polymer-Elektrolyten beschichtet. Für die Beschichtung wurde eine Lösung von Poly[bis((methoxyethoxy)ethoxy)-phosphazen] (MEEP), Lithiumbis(oxalato)borat (LiBOB) und des UV-Licht-aktiven Vernetzungsadditivs Benzophenon in Tetrahydrofuran (THF) im Gewichtsverhältnis 50 : 2 : 3 hergestellt. MEEP, LiBOB und Benzophenon wurden zur besseren Homogenisierung in Tetrahydrofuran (THF) gelöst, welches, nachdem für eine Stunde gerührt wurde, unter vermindertem Druck evaporiert wurde. Die erhaltene gelbliche, stark viskose Lösung wurde bei 20 °C für die weitere Verwendung gelagert.

Für das Drop-Coating Verfahren zur Beschichtung der Elektroden wurden 100 mg des viskosen, unvernetzten Polymergemischs in etwa 300 µL THF gelöst und 60 µL pro Elektrode wurden gleichmäßig mittels einer Eppendorf Pipette auf die aus Schritt 1.1 erhaltenen Lithium-Elektroden getropft. Die Elektroden wurden über Nacht in einem Ofen bei 65 °C getrocknet, so dass das Lösungsmittel evaporierte, und die Polymerschicht auf der strukturierten Lithium-Oberfläche anschließend für 18 Minuten unter UV Licht vernetzt.

Die beschichteten Lithium-Elektroden wurden mittels Rasterelektronen-Mikroskopie (REM, ZEISS Auriga^{®} Elektronenmikroskop) und EDX-Analyse (Oxford instruments) untersucht. Die Figur 3a) zeigt eine REM-Aufnahme der mit einem Stempel mit Quadern im Abstand von 500 µm (Stempel 2) mechanisch strukturierten Lithium-Elektroden mit funktioneller Beschichtung. Wie man der Figur 3a) entnehmen kann, folgte die Polymerelektrolyt-Beschichtung der Struktur der Lithium-Oberfläche und bedeckte die gesamte Oberfläche. Die erhaltenen Polymerschichten wiesen einschließlich der Tiefe der Ausnehmungen eine Dicke von etwa 450 µm (±20 µm) auf. Die Schichtdicke oberhalb der gefüllten Ausnehmungen betrug hierbei etwa 150 µm. Dies war gleichermaßen für die weniger stark strukturierte Oberfläche der Fall. Die Figur 3b) zeigt die EDX-Analyse für Kohlenstoff. Wie man der Figur 3b) entnehmen kann, war der Kohlenstoff mit Ausnahme von durch das Prägen verursachten Fehlstellen durchgängig und gleichmäßig in den Ausnehmungen und der Schicht verteilt. Die EDX-Analyse zeigte weiterhin, dass die Elemente Sauerstoff und Stickstoff sowie Phosphor aus dem MEEP-Polymer und Bor aus dem LiBOB-Salz jeweils gleichermaßen durchgängig und gleichmäßig verteilt vorlagen.

Dieses Ergebnis zeigt, dass mittels der angewandten Methode eine dünne Schicht von etwa 150 µm aus Polymerelektrolyten auf eine strukturierte Lithium-Elektrode aufgebracht werden kann, so dass die Schicht dem Oberflächenmuster folgt und dadurch die gesamte Oberfläche benetzt.

### Beispiel 2

### Herstellung elektrochemischer Zellen

Es wurden Zellen mit drei verschiedenen Elektrolyttypen hergestellt: Festpolymer-Elektrolyt, Gel-Polymer-Elektrolyt und ein Hybrid-Elektrolyten ausgebildet aus einem Keramik-Elektrolyten, der beidseitig mit einem Gel-Polymer-Elektrolyten beschichtet war. Die Lithium-Strukturierung war in allen Fällen mittels des in Beispiel 1.1 beschriebenen Verfahrens unter Verwendung des Stempels 2 mit 500 µm-Abstand der Ausnehmungen erfolgt, die Beschichtung mit festem Polymerelektrolyt gemäß Beispiel 1.2. Als Vergleichszellen wurden jeweils Zellen identischen Aufbaus mit nicht strukturierten Lithium-Elektroden, die identisch beschichtet waren, hergestellt.

Es wurden für die elektrochemische Analyse 2032-Knopfzellen gebaut. Die Zellen wurden als symmetrische Lithium-Zellen gebaut. Dafür wurden jeweils zwei beschichtete Elektroden mit der beschichteten Seite zueinander aufeinandergelegt. Um einen Kontakt der beiden Elektroden und somit auch einen möglichen Kurzschluss der Zelle zu vermeiden wurde jeweils ein nicht-flüssiger Elektrolyt zwischen den Elektroden angeordnet. Weitere Bestandteile des Zellaufbaus waren Spacer-Platten und ein Federring, die sich zwischen den Elektroden und dem Zellgehäuse befanden. Diese sollten die Elektroden ausreichend aufeinanderdrücken, sodass es nicht zu Kontaktproblemen zwischen den Beschichtungen der Elektroden kam. Je nach Dicke der Kombination aus Elektroden und Elektrolyt wurden Spacer und Federn angepasst.

### 2.1 Herstellung einer Festpolymer-Membran

Das in Beispiel 1.2 hergestellte unvernetzte, stark viskose Polymergemisch wurde auf eine silikonisierte Polyesterfolie (Mylar^{®}) gegeben. Ein zweites Stück Folie wurde daraufgelegt und das noch flüssige Polymergemisch zu einer etwa 150 µm (±20 µm) dicken Schicht verteilt. Zur Vernetzung wurde das Polymergemisch in dieser Form für 18 Minuten UV-Licht ausgesetzt. Anschließend konnte eine der Folien leicht von der vernetzten Polymermembran abgezogen werden und mit einem Locheisen kleine, runde Membranen der gewünschten Größe von 13 mm ausgestanzt werden. Diese ließen sich problemlos mit einer Pinzette handhaben.

### 2.2 Herstellung einer Zelle mit Festpolymer-Elektrolyt

Für Zellen mit Festpolymer-Elektrolyten wurden strukturierte, sowie als Vergleich nichtstrukturierte, Lithium-Elektroden zuerst nach dem in Beispiel 1.2 beschriebenen Verfahren beschichtet. In den Zellen wurde eine zusätzliche Festpolymer-Elektrolyt-Membran aus einer vernetzten Mischung aus MEEP-Polymer und LiBOB-Salz gemäß Beispiel 2.1 zwischen die Lithium-Elektroden eingefügt.

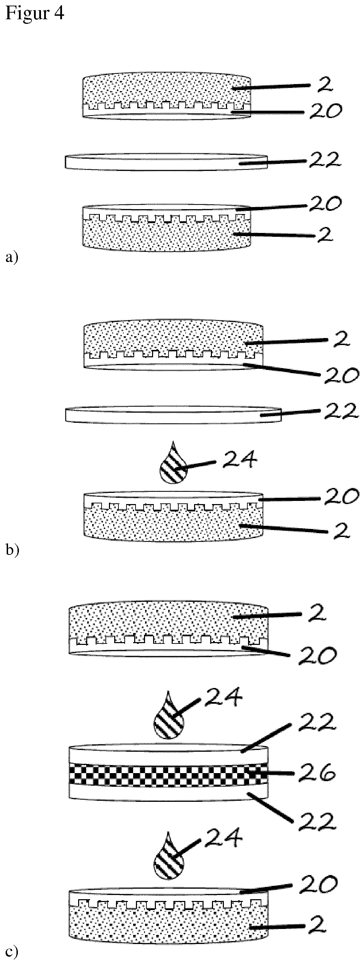

In Figur 4a) ist der Zellaufbau schematisch dargestellt, wobei jeweils eine strukturierte Lithium-Elektrode 2 mit Festpolymer-Elektrolyt-Beschichtung 20 als Anode und Kathode verwendet wurde und als nicht-flüssiger Elektrolyt eine Festpolymer-Elektrolyt-Membran 22.

### 2.3 Herstellung einer Zelle mit Gel-Polymer-Elektrolyt

Für Zellen mit Gel-Polymer-Elektrolyten wurden strukturierte, sowie als Vergleich nichtstrukturierte Lithium-Elektroden zuerst nach dem in Beispiel 1.2 beschriebenen Verfahren beschichtet. In den Zellen wurde eine zusätzliche Festpolymer-Elektrolyt-Membran aus einer vernetzten Mischung aus MEEP-Polymer und LiBOB-Salz gemäß Beispiel 2.1 zwischen die Lithium-Elektroden eingefügt. Um hieraus einen Gel-Polymer-Elektrolyten zu generieren wurde während des Zellbaus flüssiger Elektrolyt aus 0,7 M LiBOB in EC:DMC (1:1 Gew.-%) im Massenverhältnis von 1:1 zu dem festen Polymer-Elektrolyten zugegeben. Durch die Benetzung des Festpolymers mit dem flüssigen Elektrolyten erfolgte eine Gelierung des Polymers und resultierte in einem Leckage-freien Gel-Elektrolyten. Dieser ist damit als nichtflüssig definiert.

In Figur 4b) ist der Zellaufbau schematisch dargestellt, wobei jeweils eine strukturierte Lithium-Elektrode 2 mit Festpolymer-Elektrolyt-Beschichtung 20 als Anode und Kathode verwendet wurde und aus der Aufbringung einer Festpolymer-Elektrolyt-Membran 22 aus einer vernetzten Mischung aus MEEP-Polymer und LiBOB-Salz und einem flüssigen Elektrolyten 24 ein Gel-Polymer-Elektrolyt resultiert.

### 2.4 Herstellung einer Zelle mit Hybrid-Elektrolyt

Für die Zellen mit Hybrid-Elektrolyt wurden Lithium-Elektroden wie oben beschriebenen beschichtet. Zwischen den Elektroden wurde ein Polymer-beschichteter Festkörperelektrolyt-Pressling aus einer 400 µm dicken Schicht aus LLZO-Material (Al-dotiertes Li_{6.6}La₃Zr_{1.6}Ta_{0.4}O₁₂, Forschungszentrum Jülich), der beidseitig mit einer etwa 100 µm dicken Schicht des Gel-Polymer-Elektrolyten beschichtet war, angeordnet. Der Gel-Polymer beschichtete Festkörperelektrolyt wurde hergestellt, indem das LLZO-Material analog der Beschichtung der Elektroden beidseitig mittels Drop-Coating mit der in THF gelösten unvernetzten Polymermischung aus MEEP-Polymer, LiBOB-Salz und Benzophenone als Vernetzer beschichtet und nach dem Trocknen unter UV-Licht vernetzt wurde. Um aus der Festpolymer-Schicht ein Gel-Polymer auf dem LLZO-Material zu generieren, wurde während des Zellbaus flüssiger Elektrolyt aus 0,7 M LiBOB in einem Gemisch aus Ethylencarbonat und Dimethylcarbonat (EC:DMC, 1:1 Gew.%) in einem Massenverhältnis von 1:1 zu der gesamten Festpolymer-Elektrolytmenge jeweils zwischen Polymer-Festkörperelektrolyt-Pellet und Lithium-Elektrode gegeben.

In Figur 4c) ist der Zellaufbau schematisch dargestellt, wobei jeweils eine strukturierte Lithium-Elektrode 2 mit Festpolymer-Elektrolyt-Beschichtung 20 als Anode und Kathode verwendet wurde. Ein Pellet aus LLZO-Material 26 beidseitig beschichtet mit Festpolymer-Elektrolyt-Membran 22 aus einer vernetzten Mischung aus MEEP-Polymer und LiBOB-Salz wurde mit einem flüssigen Elektrolyten 24 getränkt, woraus eine beidseitige Beschichtung mit Gel-Polymer-Elektrolyt resultierte.

### Beispiel 3

### Elektrochemische Charakterisierung einer Zelle mit Festpolymer-Elektrolyt

Die gemäß Beispiel 2.1 hergestellten Zellen mit strukturierten und beschichteten Lithium-Elektroden mit Festpolymer-Elektrolyt sowie die Vergleichszelle mit nicht-strukturierten Lithium-Elektroden wurden mittels Impedanz-Messungen und Zyklierungsexperimenten (Lithium-Auflösung/-Abscheidung) miteinander verglichen.

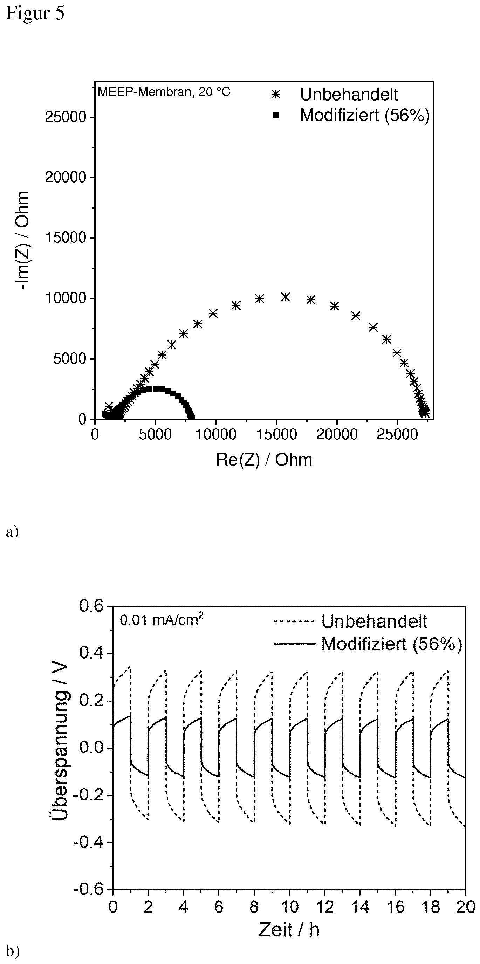

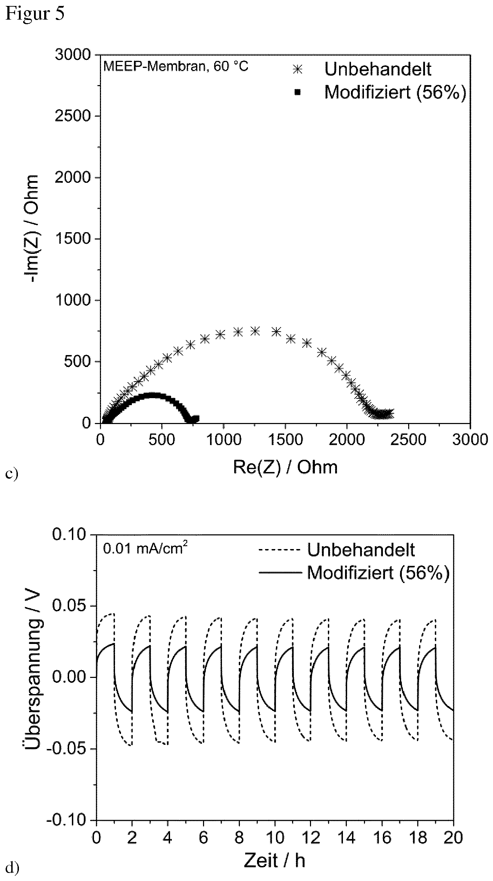

Die elektrochemischen Untersuchungen erfolgten in 2032-Knopfzellen. Der Zusammenbau der Zellen erfolgte in einer mit einer Inertgasatmosphäre von Argon gefüllten Glovebox (MBraun). In der Zyklierung wurde eine konstante Stromdichte von 0,01 mA/cm² angelegt, wobei eine Lithium-Abscheidung auf der einen und eine Lithium-Auflösung auf der anderen Elektrode stattfand. Die folgende Polarisierung auf den Elektroden wurde als Überspannung gemessen. Die Stromrichtung wurde nach einer Stunde umgekehrt. Die Messung erfolgte zwischen -1,5 V und 1,5 V (Abbruchkriterium der Zellspannung) bei 20 °C und 60 °C. Die Ergebnisse bei 20 °C sind in Figur 5a) und 5b) dargestellt, die Ergebnisse bei 60 °C in Figur 5c) und 5d).

Die Figur 5a) zeigt die Nyquist Darstellung der strukturierten und beschichteten Lithium-Elektrode mit Festpolymer-Elektrolyt ("Modifiziert (56%)" Quadrate) und der Vergleichszelle mit nicht-strukturierten Lithium-Elektroden ("Unbehandelt", Sternchen). Wie man der Figur 5a) entnehmen kann, zeigte die Impedanz-Messung eine signifikante Verminderung des Widerstands mit der Lithium-Strukturierung für die Zellen mit dem Festpolymer-Elektrolyten. Weitere Versuche unter Verwendung von Lithium-Elektroden, deren Oberfläche Ausnehmungen in einem Abstand von 1000 µm, und damit eine Vergrößerung der Oberfläche um 20% aufwies, zeigte ebenfalls eine deutliche, im Vergleich etwas geringere, Verminderung des Widerstands. Dies zeigt, dass je höher die Strukturdichte und dadurch je größer die Lithium-Oberfläche, desto stärker der Widerstand abnahm. Es wird davon ausgegangen, dass die größere Oberfläche der Elektrode die elektrochemischen Reaktionen an der Oberfläche erleichtert und sich die Überspannung verringert.

Die Figur 5b) zeigt die Potentialprofile der strukturierten Lithium-Elektrode mit Festpolymer-Elektrolyt ("Modifiziert (56%)") und der Vergleichszelle mit nicht-strukturierten Lithium-Elektroden ("Unbehandelt"). Auch die Abscheidungs-/Auflösungs-Experimente zeigten eine Verminderung in der Überspannung durch die Lithium-Strukturierung. Auch hier zeigten weitere Vergleichsversuche mit der geringer strukturierten Oberfläche, dass der Effekt je größer war, desto dichter die Strukturierung und dadurch größer die Oberfläche war.

Die Figuren 5c) und d) zeigen, dass der Oberflächenwiderstand und die Überpotentiale geringer als bei 20 °C sind, was eine bessere, ionische Leitfähigkeit bedeutet.

### Beispiel 4

### Elektrochemische Charakterisierung einer Zelle mit Gel-Polymer-Elektrolyt

Die gemäß Beispiel 2.2 hergestellte Zelle mit strukturierten und beschichteten Lithium-Elektroden und Gel-Polymer-Elektrolyt sowie die Vergleichszelle mit nicht-strukturierten Lithium-Elektroden wurden mittels Impedanz-Messungen und Zyklierungsexperimenten (Lithium-Auflösung/-Abscheidung) untersucht, wie in Beispiel 3 beschrieben, wobei die Messung bei 20 °C erfolgte.

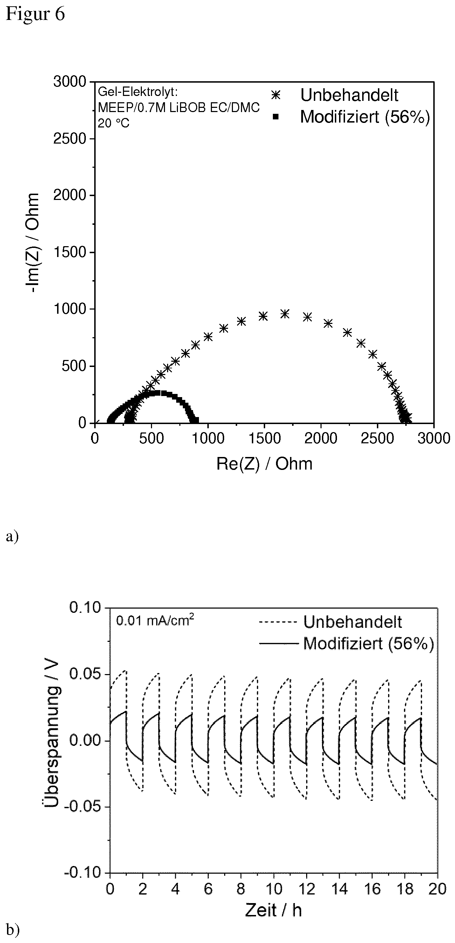

Die Figur 6a) zeigt die Nyquist Darstellung der strukturierten und beschichteten Lithium-Elektrode mit Gel-Polymer-Elektrolyt ("Modifiziert (56%)" Quadrate) und der Vergleichszelle mit nicht-strukturierten Lithium-Elektroden ("Unbehandelt", Sternchen). Wie man der Figur 6a) entnehmen kann, wurde eine signifikante Verminderung des Widerstands mit der Lithium-Strukturierung auch für die Zellen mit dem Gel-Polymer-Elektrolyten erzielt. Entsprechend wurde auch in den in Figur 6b) gezeigten Abscheidungs-/Auflösungs-Experimenten eine signifikante Verminderung in der Überspannung erzielt.

### Beispiel 5

### Elektrochemische Charakterisierung einer Zelle mit Hybrid-Elektrolyt

Die gemäß Beispiel 2.3 hergestellte Zelle mit strukturierten und beschichteten Lithium-Elektroden mit Hybrid-Elektrolyt aus LLZO-Festkörperelektrolyt, der beidseitig mit einer 100 µm dicken Schicht Gel-Polymer-Elektrolyt beschichtet war, sowie die Vergleichszelle mit nicht-strukturierten Lithium-Elektroden wurden mittels Impedanz-Messungen und Zyklierungsexperimenten (Lithium-Auflösung/-Abscheidung) untersucht, wie in Beispiel 3 beschrieben. Die Messungen erfolgten bei 60 °C.

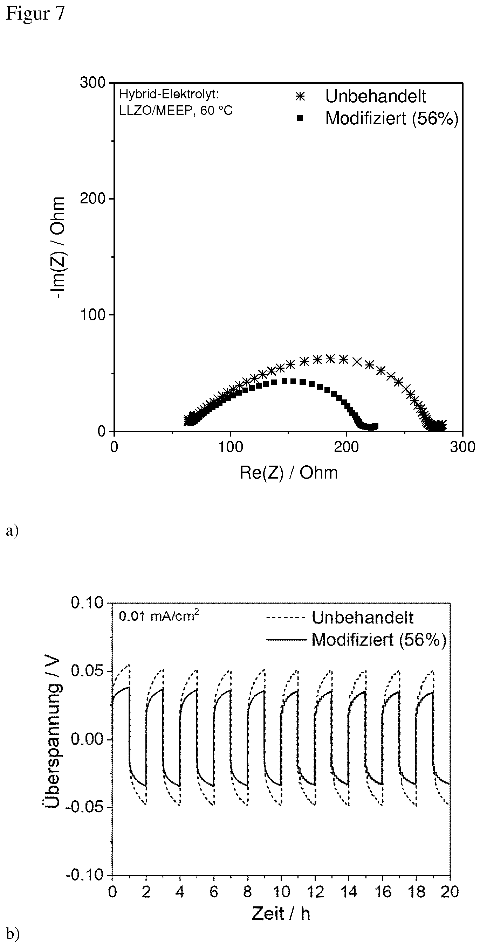

Die Figur 7a) zeigt die Nyquist Darstellung für die Zelle mit Hybrid-Elektrolyt und strukturierten und beschichteten Lithium-Elektroden ("Modifiziert (56%)" Quadrate) und der Vergleichszelle mit nicht-strukturierten Lithium-Elektroden ("Unbehandelt", Sternchen). Wie man der Figur 7a) entnehmen kann, wurde ähnlich wie für die Fest- und Gel-Polymer-Elektrolyten auch für die Zellen mit dem Hybrid-Elektrolyten eine deutliche Verminderung des Grenzflächenwiderstands erhalten. Entsprechend wurde auch in den in Figur 7b) gezeigten Abscheidungs-/Auflösungs-Experimenten eine Reduktion der Überspannung erzielt.

### Beispiel 6

### Chemische Beschichtung der strukturierten Lithium-Elektrode durch Begasung mit CO₂

Weiter wurde der Effekt einer chemischen Schutzschicht, einer so genannten "artificial SEI" auf den strukturierten Lithium-Elektroden untersucht. Diese unterstützen die Langlebigkeit der Batterien und erhöhen potenziell die Sicherheit. Hierzu wurde Lithium wie unter Beispiel 1.1 beschrieben mechanisch bearbeitet, wobei Ausnehmungen in einem Abstand von 500 µm und damit eine Vergrößerung der Oberfläche um 56%, verwendet wurden. Die strukturierte Elektrode wurde dann für drei Wochen in reinem CO₂ gelagert. Anschließend wurde die Elektrode wie unter Beispiel 1.2 beschrieben beschichtet.

Zur elektrochemischen Untersuchung der Effekte der ausgebildeten Carbonat-Schutzschicht wurden wie unter Beispiel 2.2 beschrieben symmetrischen Knopfzellen mit Festpolymer-Elektrolyt-Membran aus einer vernetzten Mischung aus MEEP-Polymer und LiBOB-Salz zwischen den Lithium-Elektroden hergestellt und Impedanz-Messungen und Zyklierungsexperimente durchgeführt. Für Vergleichszellen wurden strukturierte Lithium-Elektroden, die für drei Wochen unter Wasserausschluss in einem Trockenraum gelagert wurden, verwendet.

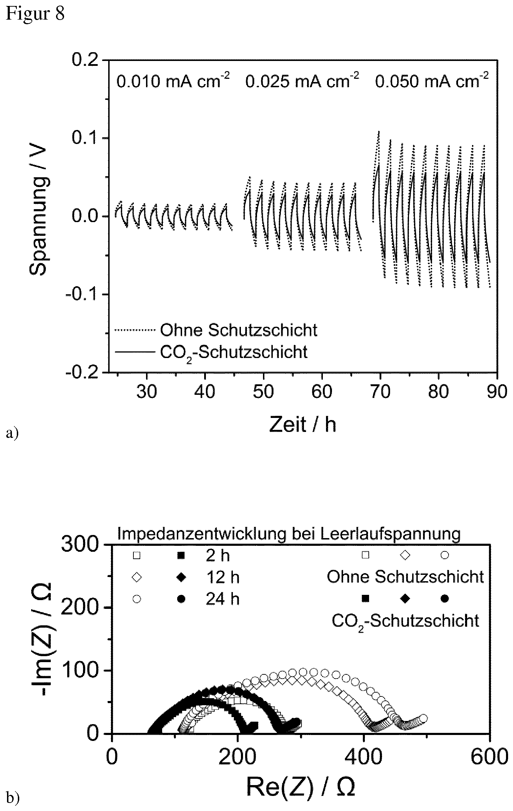

Zyklierungen wurden bei konstanten Stromdichten von 0,01 mA/cm², 0,025 mA/cm² und 0,05 mA/cm² durchgeführt. Die folgende Polarisierung auf den Elektroden wurde als Überspannung gemessen. Die Stromrichtung wurde nach einer Stunde umgekehrt. Die Messung erfolgte in einem Bereich zwischen -1,5 V und 1,5 V (Abbruchkriterium der Zellspannung) bei 60 °C. Die Ergebnisse sind in Figur 8a) und 8b) dargestellt.

Figur 8a) zeigt die Ergebnisse des Lithium Abscheidungs-Auflösungs-Experiments und Figur 8b) die zeitliche Entwicklung des komplexen Zellwiderstandes im Leerlauf für den symmetrischen Knopfzellaufbau mit strukturierten Lithiumelektroden mit 56% Oberflächenvergrößerung, funktioneller Beschichtung mit MEEP-Polymer und Festpolymermembran, für strukturierte Elektroden, die in CO₂ Atmosphäre gelagert wurden und für Vergleichszellen mit Elektroden ohne angereicherte Carbonatschicht. Der Vergleich zeigt, dass im Falle der CO₂-Begasung eine verminderte Überspannung auftrat, wie aus Figur 8a) ersichtlich ist, und verminderte Oberflächenwiderstände festgestellt werden konnten, wie aus Figur 8b) ersichtlich ist.

Diese Ergebnisse zeigen, dass durch eine Begasung mit CO₂ die Überspannungen weiter vermindert und der Oberflächenwiderstand weiter verringert wurden. Somit zeigt die Schutzschicht gebildet durch Kontakt mit CO₂ weitere Verbesserung.

### Beispiel 7

### Chemische Beschichtung der strukturierten Lithium-Elektrode durch Schichtbildungsadditive

Weiter wurde der Effekt einer chemischen Schutzschicht ausgebildet aus den bekannten Additiven Vinylencarbonat (VC) und 1-Fluoroethylencarbonat (FEC) sowie von Lithiumnitrat untersucht. Strukturierte Lithiumelektroden wurden hierzu für jeweils zwei Tage in Vinylencarbonat, 1-Fluoroethylencarbonat oder 10 Gew.% Lithiumnitrat in 1,3-Dioxolan gelöst, gelagert. Für Vergleichszellen wurden strukturierte Lithium-Elektroden für zwei Tage unter Wasserausschluss in einem Trockenraum gelagert. Anschließend wurden wie in Beispiel 6 beschrieben symmetrische Knopfzellen mit Festpolymer-Elektrolyt-Membran hergestellt und Impedanz-Messungen und Zyklierungsexperimente durchgeführt.

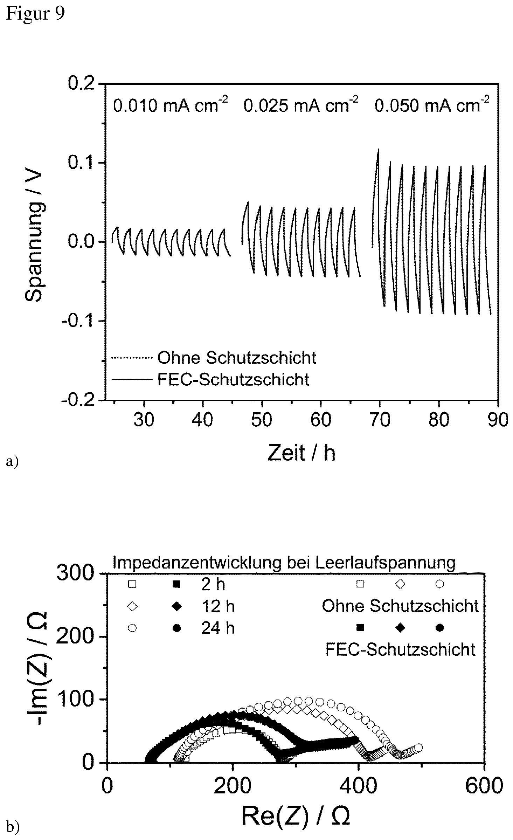

Die Figur 9a) zeigt die Ergebnisse des Lithium Abscheidungs-Auflösungs-Experiments und Figur 9b) die zeitliche Entwicklung des komplexen Zellwiderstandes im Leerlauf für den symmetrischen Knopfzellaufbau mit strukturierten Lithiumelektroden mit 56% Oberflächenvergrößerung, funktioneller Beschichtung mit MEEP-Polymer und Festpolymermembran, die in FEC gelagert wurden und für die Vergleichszelle mit Elektroden ohne FEC-Schicht. Der Vergleich zeigt, dass im Falle der FEC-Beschichtung unveränderte Überspannungen auftraten, wie aus Figur 9a) ersichtlich ist, jedoch verminderte Oberflächenwiderstände festgestellt werden konnten, wie aus Figur 9b) ersichtlich ist. Obwohl die Überspannungen bei FEC-Lagerung identisch mit der für die Referenz-Elektrode waren, ist der Effekt am stärksten in der Oberflächenspannung zu erkennen. Diese war nach 24 h um die Hälfte kleiner als bei der mechanisch strukturierten Zelle ohne FEC-Beschichtung. Dies kann durch eine Schicht mit der Charakteristik einer erhöhten Lithiumtransportzahl erklärt werden.

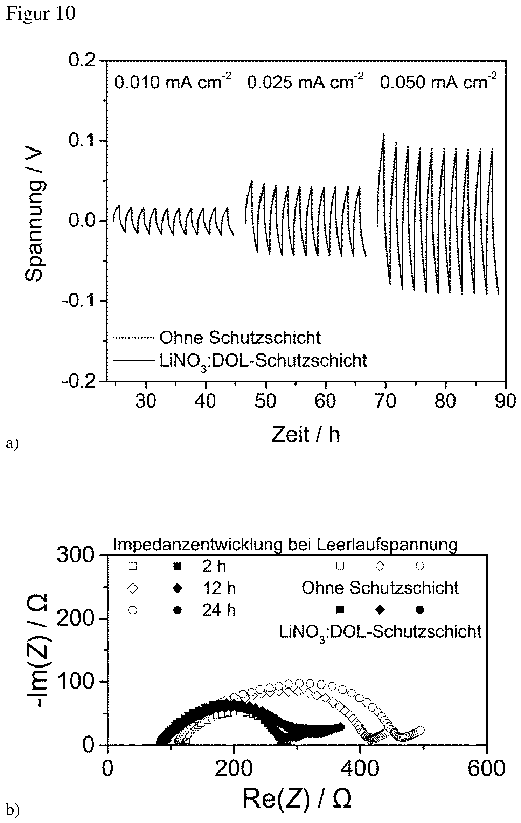

Die Figur 10a) zeigt die Ergebnisse des Lithium Abscheidungs-Auflösungs-Experiments und Figur 10b) die zeitliche Entwicklung des komplexen Zellwiderstandes im Leerlauf für den symmetrischen Knopfzellaufbau mit strukturierten Lithiumelektroden, die in LiNOs:DOL gelagert wurden und für die Vergleichszelle. Der Vergleich zeigt, dass, wie aus Figur 10a) ersichtlich ist, im Falle der LiNOvDOL-Lagerung leicht verminderte Überspannungen auftraten und verminderte Oberflächenwiderstände festgestellt werden konnten, wie aus Figur 10b) ersichtlich ist.

Die Kombination aus LiNOs und 1,3-Dioxolan zeigt somit ebenfalls ein verbessertes Verhalten gegenüber der nicht chemisch modifizierten, strukturierten Elektrode. Insbesondere zeigte sich ein Unterschied im Falle des Oberflächenwiderstandes, der bereits nach dem Bau der Zelle konstant war. Dies zeigt eine bereits gut passivierte Lithiumoberfläche.

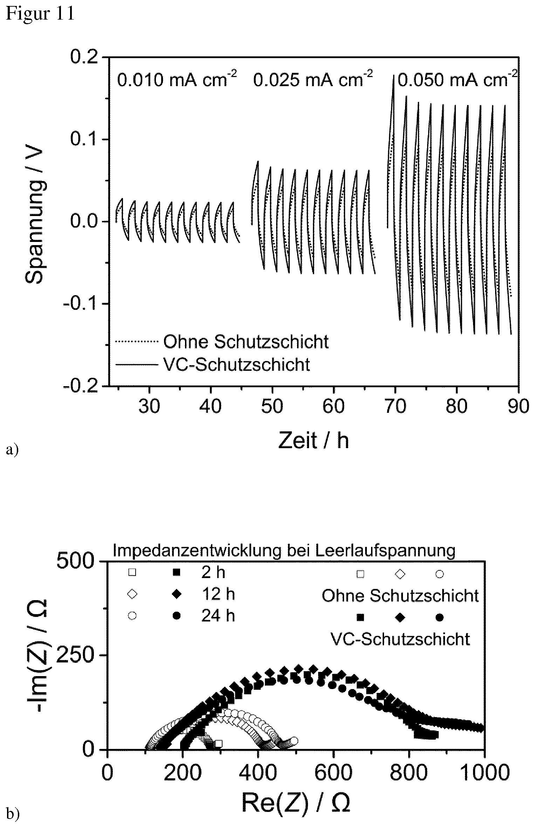

Wie die Figuren 11a) und 11b) zeigen, zeigte die Zelle nach Lagerung der Lithiumelektroden in Vinylencarbonat demgegenüber erhöhte Überspannungen und erhöhte Oberflächenwiderstände. Vinylencarbonat erzeugte somit eine Schicht auf Lithium, die einen erhöhten Widerstand aufwies. Dies kann durch die Bildung einer dickeren Schicht bzw. einer Schicht aus mehr polymerischen Komponenten erklärt werden. Vinylencarbonat ist somit, verglichen mit den anderen Substanzen, als weniger vorteilhaft in Bezug auf Widerstand und Überspannungen einzuordnen, kann jedoch im Falle einer flexiblen Schutzschicht favorisiert sein.

Insgesamt kann somit durch die Kombination mit einer chemischen Beschichtung der strukturierten, insbesondere mikrostrukturierten, Elektrode eine Lithiumoberfläche mit weiter modifizierten Eigenschaften erhalten werden. Unter den gezeigten Beispielen ließ sich CO₂ als beste chemische Modifizierung erkennen.

### Beispiel 8

### Vergleich von Zellen mit Festpolymer-Elektrolyt verschiedener Dicke

Eine Zelle mit Festpolymer-Elektrolyt wurde hergestellt wie in Beispiel 2.2 beschrieben, indem unter Verwendung des Stempel 2 (Quader 300 µm x 300 µm x 300 µm, 500 µm Abstand, resultierend in 56% Erhöhung der Oberfläche) strukturierte Lithium-Elektroden nach dem in Beispiel 1.2 beschriebenen Verfahren beschichtet wurden und zwischen die Elektroden eine Festpolymer-Elektrolyt-Membran aus einer vernetzten Mischung aus MEEP-Polymer und LiBOB-Salz gemäß Beispiel 2.1 eingefügt wurde.

Eine weitere Zelle mit einer geringeren Elektrolytmenge an Festpolymer-Elektrolyt wurde hergestellt, indem auf die Verwendung der zusätzlichen Polymerelektrolytmembran zwischen den Elektroden verzichtet wurde. Hierdurch ergab sich die Dicke des Polymerelektrolyt allein aus den beiden Elektrodenbeschichtungen (Drop-Coating).

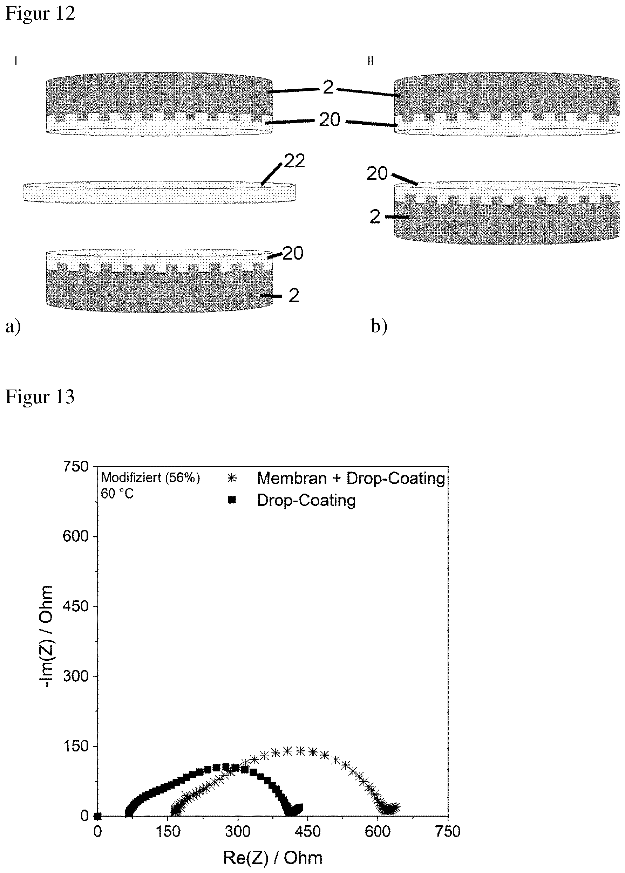

Die Figur 12a) zeigt schematisch den Zellaufbau I, welchem dem in Figur 4a) dargestellten entspricht, wobei jeweils eine strukturierte Lithium-Elektrode 2 mit Festpolymer-Elektrolyt-Beschichtung 20 als Anode und Kathode verwendet wurde und als nicht-flüssiger Elektrolyt eine Festpolymer-Elektrolyt-Membran 22. Figur 12b) zeigt einen entsprechenden Zellaufbau II ohne zusätzliche Festpolymer-Elektrolyt-Membran.

Die elektrochemischen Untersuchungen erfolgten in 2032-Knopfzellen wie in Beispiel 3 beschrieben. Die Figur 13 zeigt die Nyquist-Darstellung für die strukturierte Lithium-Elektroden mit Festpolymer-Elektrolyt in Form einer Membran zusätzlich zur Elektrodenbeschichtung ("Membran + Drop-Coating", Sternchen, Schema I) wie auch für den Zellaufbau nur mit Elektrodenbeschichtung ("Drop-Coating", Quadrate, Schema II) gemessen bei 60 °C. Wie man der Figur 13 entnehmen kann, führte die geringere Elektrolytmenge zu einer Verringerung des Ladungstransferwiderstandes.

Dies zeigt, dass auch Ausführungsformen, in denen der Festpolymerelektrolyt zwischen den strukturierten Elektroden lediglich durch die Kombination der beiden dünnen Schichten auf den strukturierten Lithium-Elektrode ausgebildet wird, gute Ergebnisse zeigen.

### Beispiel 9

### Vergleich verschiedener Tiefen der Ausnehmungen in den Lithium-Elektroden

Die Änderung der Tiefe der Ausnehmungen in den Lithium-Elektroden und die damit einhergehende Änderung der Oberflächenvergrößerung der Metall-Elektroden wurde untersucht. Hierbei wurde ebenfalls das Elektrodenmaterial, welches durch Strukturierungen modifiziert wurde, in Form von dünneren Lithiummetall-Elektroden verringert. Dafür wurde die ursprünglich 500 µm dicke Lithiumfolie (Albemarle) in einem Press-Verfahren (Roll-Pressen) auf 300 µm bzw. 150 µm ausgewalzt.

Für die mechanische Modifizierung der Lithiumelektroden wurden neue Block-Press Stempel mit angepassten Maßen verwendet. Während für die 500 µm dicke Lithiumfolie der Stempel 2 mit den Blockmaßen von 300 µm x 300 µm x 300 µm und einem Blockabstand von 500 µm verwendet wurde, wurden für die 300 µm dicke Lithiumfolie ein Stempel 3 mit den Blockmaßen von 150 µm (Höhe) x 300 µm x 300 µm und für die 150 µm dicke Lithiumfolie ein Stempel 4 mit den Blockmaßen von 75 µm (Höhe) x 300 µm x 300 µm verwendet. Die folgende Tabelle 1 fasst die Parameter der Strukturierungen zusammen:

**Tabelle 1: Maße der Stempel, entsprechende Oberflächenvergrößerungen und Dicke der Lithiumfolie**

| | Stempel 2 | Stempel 3 | Stempel 4 |
|---|---|---|---|
| Blockhöhe | 300 µm | 150 µm | 75 µm |
| Blockabstand | 500 µm | 500 µm | 500 µm |
| Oberflächenvergrößerung | 56% | 28% | 14% |
| Lithiumdicke | 500 µm | 300 µm | 150 µm |

Die entsprechend hergestellten Zellen mit strukturierten und beschichteten Lithium-Elektroden mit Festpolymer-Elektrolyt sowie jeweils eine Vergleichszelle mit nichtstrukturierter Lithium-Elektrode entsprechender Dicke wurden mittels Impedanz-Messungen wie in Beispiel 3 beschrieben bei 60 °C miteinander verglichen.

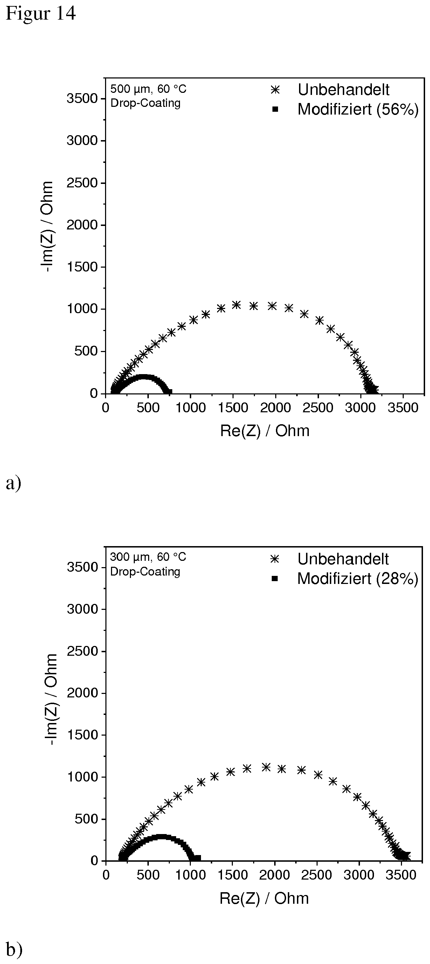

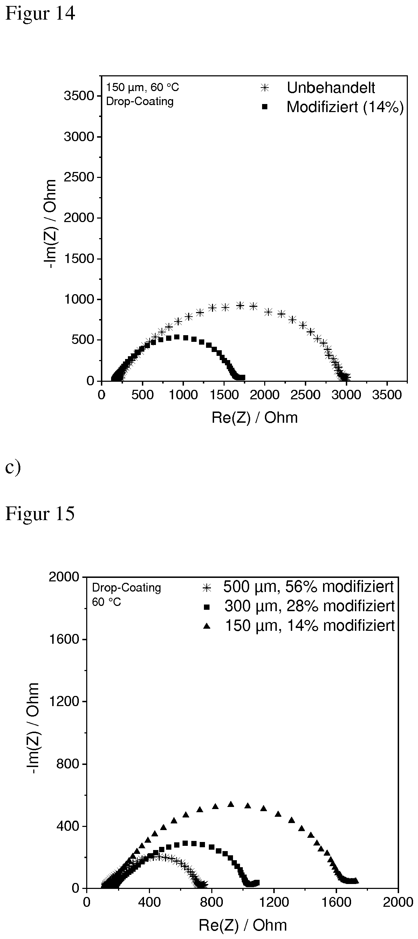

Die in Figur 14 zeigt die Nyquist-Darstellung der symmetrischen Zellen mit festem Polymerelektrolyt für eine Elektrodendicke von 500 µm und Ausnehmungen einer Tiefe von 300 µm in Figur 14a), 300 µm und einer Tiefe von 150 µm in Figur 14b) und 150 µm und einer Tiefe von 75 µm in Figur 14c) jeweils gegen die unstrukturierte Vergleichszelle. Die in Figur 14 gezeigten Nyquist-Darstellungen zeigen für jede der Strukturierungen eine Verringerung des Widerstandes für die strukturierten Zellen (Quadrate) gegenüber den nicht strukturierten Vergleichszellen. Dieser Effekt wird jedoch schwächer je weniger tief die Ausnehmung war, da damit die Vergrößerung der Oberfläche geringer wurde. Dies wird auch durch den direkten Vergleich der verschiedenen, modifizierten Elektroden in Figur 15 gezeigt. Die 150 µm dicke Elektrode strukturiert mit 75 µm tiefen Ausnehmungen und 14% vergrößerter Oberfläche wies einen deutlich größeren Widerstand als die anderen beiden auf, während die 500 µm dicke Elektrode mit 300 µm tiefen Ausnehmungen den geringsten Widerstandswert zeigte.

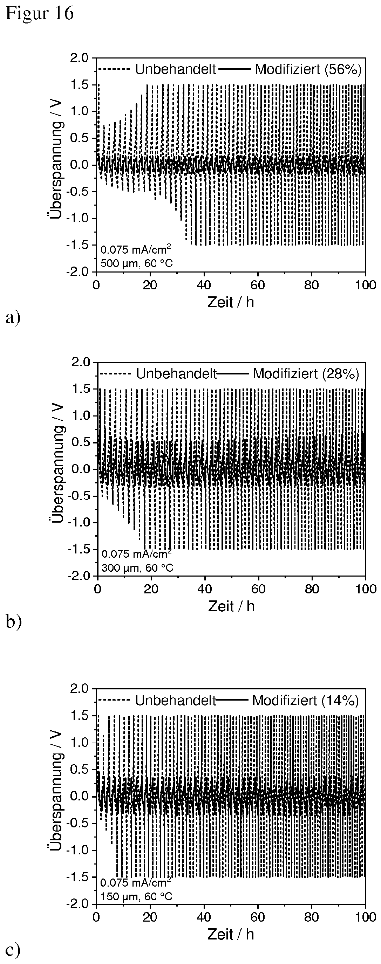

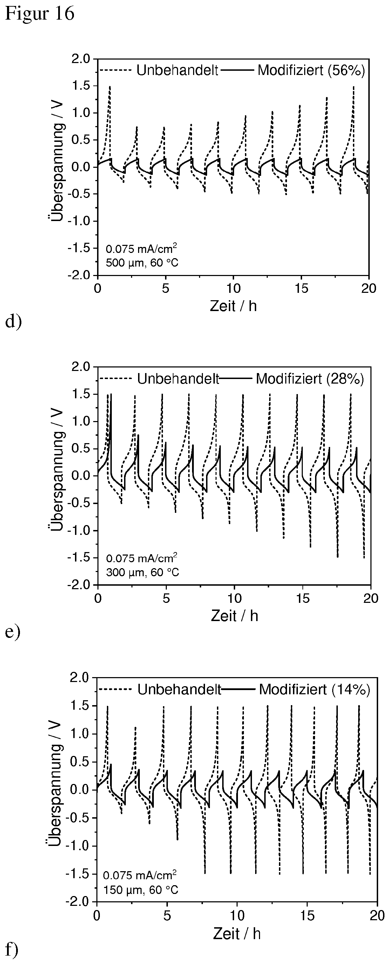

Weiterhin wurden Zyklierungsexperimente (elektrochemische Lithium-Auflösung/- Abscheidung) mit symmetrischen Zellen mit modifizierten und unmodifizierten Lithiummetallelektroden durchgeführt. Die Figur 16 zeigt die Potentialprofile bei 60 °C und einer Stromdichte von 0,075 mA/cm² für die jeweiligen strukturierten Lithium-Elektroden mit Festpolymer-Elektrolyt ("Modifiziert", durchgezogene Linie) und die jeweilige Vergleichszelle mit nicht strukturierten Lithium-Elektroden ("Unbehandelt", gestrichelte Linie) für eine Elektrodendicke von 500 µm und Ausnehmungen einer Tiefe von 300 µm in Figur 16a), 300 µm und einer Tiefe von 150 µm in Figur 16b) und 150 µm und einer Tiefe von 75 µm in Figur 16c) über einen Zeitraum vom 100 Stunden. Die Figuren 16d), e) und f) zeigen jeweils die Überspannung der ersten 20 Stunden für die Elektrodendicke von 500 µm und Ausnehmungen einer Tiefe von 300 µm, 300 µm und einer Tiefe von 150 µm und 150 µm und einer Tiefe von 75 µm.

Wie man der Figur 16 entnimmt, erreichten die Zellen mit unmodifizierten Elektroden bei einer Stromdichte von 0,075 mA/cm² und einer Temperatur von 60 °C unabhängig von ihrer Dicke teilweise direkt das festgelegte Überspannungslimit von 1,5 V, was unmittelbar zum Abbruch des Lade- bzw. Entladevorgangs führte. Im Vergleich dazu zeigte sich für die modifizierten Elektroden ein über die ersten 50 Zyklen konstant geringeres Überpotential von maximal ca. 0,6 V bei den Elektroden mit 300 µm Lithium und 300 µm Ausnehmungen und ca. 0,3 V für die 150 µm Lithiumfolie mit 75 µm Ausnehmungen. Somit scheint die mechanische Modifizierung auch die Zyklenstabilität und die Lebensdauer der Zelle zu erhöhen.

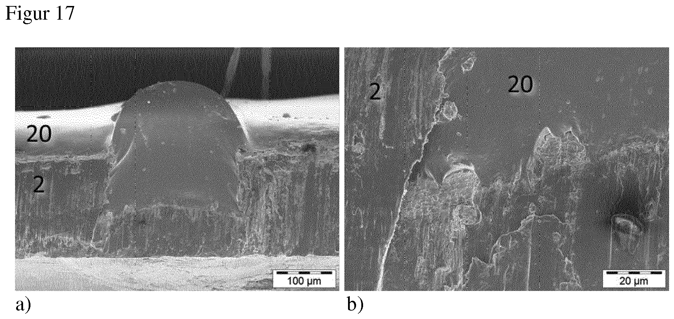

Die zyklisierten Elektroden wurden anschließend mit einem Rasterelektronenmikroskop analysiert. In Figur 17a) ist der Querschnitt durch die Ausnehmung einer Tiefe von 150 µm in einer 300 µm dicken Lithiummetallelektrode abgebildet. Die polymerbeschichtete Seite zeigt dabei nach oben. Figur 17b) zeigt einen vergrößerten Ausschnitt. In Figur 17a) ist zu erkennen, dass die Ausnehmung sehr gut mit dem Polymer ausgefüllt wurde. Somit ist das Drop-Coating Beschichtungsverfahren auch auf die dünneren Lithiumelektroden übertragbar.

Oberhalb der Ausnehmung ist zudem eine Wölbung im Polymer zu sehen. Es wird angenommen, dass das Polymer dort von in der Ausnehmung abgeschiedenem Lithium nach oben gedrückt wurde. Insgesamt ist erkennbar, dass das Lithium vornehmlich in der Ausnehmung gleichmäßig abgeschieden wurde. In der vergrößerten Ansicht der Figur 17b) ist zu sehen, dass das Lithium dennoch nicht nur homogen in der Ausnehmung abgeschieden wurde. Es bildeten sich ebenfalls an Wand und Boden der Ausnehmung Lithiumabscheidungen mit höherer Oberfläche, welche in das Polymer hineinragen.

Diese Ergebnisse zeigen, dass die allein durch die Beschichtung mittels Drop-Coating aufgebrachte Polymerelektrolytmenge ausreichte, um die gesamte Elektrode zu benetzten. Eine zusätzliche Membran kann die Lebensdauer der Zelle durch ihre Eigenschaft als Barriere verlängern, jedoch gleichzeitig den Elektrolytwiderstand in der Zelle erhöhen. Weiter konnte gezeigt werden, dass sich das Drop-Coating und Block-Press-Verfahren auch auf dünnere Lithiumelektroden übertragen lässt. Ausnehmungen von 75 µm, 150 µm und 300 µm wiesen eine gute Benetzung durch das Polymer auf und durch die Modifikation konnten Impedanzen und Überpotentiale gesenkt werden. Der Polymerelektrolyt sorgte für eine weitestgehend gleichmäßige Abscheidung des Lithiums.

Die dieser Patentanmeldung zu Grunde liegende Erfindung entstand in einem Projekt, welches unter den Förderkennzeichen 03XP0084A und 03XP0084C vom BMBF gefördert wurde.

## Patentansprüche

1. Metall-Elektrode oder Stromsammler für einen Energiespeicher, wobei die Oberfläche der Elektrode (2) oder des Stromsammlers eine Mehrzahl von zueinander beabstandeten, Sackloch-artigen Ausnehmungen (6), wobei die Ausnehmungen die Metall-Elektrode nicht vollständig durchbrechen, umfasst, wobei die derart strukturierte Oberfläche mit einem festen Polymerelektrolyten (20) beschichtet ist, und
wobei die Ausnehmungen (6) mit dem festen Polymerelektrolyten (20) gefüllt sind, **dadurch gekennzeichnet, dass** die Ausnehmungen (6) eine Länge, Breite und/oder Tiefe in einem Bereich von ≥ 200 µm bis ≤ 500 µm aufweisen.

2. Metall-Elektrode oder Stromsammler nach Anspruch 1, wobei die strukturierte Oberfläche der Elektrode (2) in einem Bereich von ≥ 20 % bis ≤ 200 %, vorzugsweise von ≥ 30 % bis ≤ 150 %, bevorzugt von ≥ 50 % bis ≤ 100 %, vergrößert ist, bezogen auf einer Fläche gleicher Abmessung mit planer Oberfläche.

3. Metall-Elektrode oder Stromsammler nach Anspruch 1 oder 2, wobei die Ausnehmungen (6) eine Länge, Breite und/oder Tiefe in einem Bereich von ≥ 300 µm bis ≤ 400 µm aufweisen.

4. Verfahren zur Herstellung einer Metall-Elektrode oder eines Stromsammlers für einen Energiespeicher nach Anspruch 1, **dadurch gekennzeichnet, dass** man die Strukturierung der Metall-Oberfläche mit Ausnehmungen durch ein Rolle-zu-Rolle-Verfahren durchführt.

## Claims

1. Metal electrode or current collector for an energy storage device, wherein the surface of the electrode (2) or the current collector comprises a plurality of blind-hole-like recesses (6) spaced apart from each other, wherein the recesses do not completely penetrate the metal electrode, wherein the surface structured in this way is coated with a solid polymer electrolyte (20), and wherein the recesses (6) are filled with the solid polymer electrolyte (20), **characterized in that** the recesses (6) have a length, width and/or depth in a range from ≥ 200 µm to ≤ 500 µm.

2. Metal electrode or current collector according to claim 1, wherein the structured surface of the electrode (2) is enlarged in a range from ≥ 20% to ≤ 200%, preferably from ≥ 30% to ≤ 150%, more preferably from ≥ 50% to ≤ 100%, with respect to an area of the same dimension with a planar surface.

3. Metal electrode or current collector according to claim 1 or 2, wherein the recesses (6) have a length, width and/or depth in a range from ≥ 300 µm to ≤ 400 µm.

4. Method of producing a metal electrode or a current collector for an energy storage device according to claim 1, **characterized in that** the structuring of the metal surface with recesses is carried out by a roll-to-roll process.

## Revendications

1. Électrode métallique ou collecteur de courant pour un accumulateur d'énergie, la surface de l'électrode (2) ou du collecteur de courant comportant une pluralité de creux (6) de type trous borgnes espacés les uns des autres, les creux ne transperçant pas complètement l'électrode métallique, la surface ainsi structurée étant revêtue d'un électrolyte polymère (20) solide et les creux (6) étant remplis de l'électrolyte polymère (20) solide, **caractérisée en ce que** les creux (6) présentent une longueur, une largeur et/ou une profondeur dans une plage de ≥ 200 µm à ≤ 500 µm.

2. Électrode métallique ou collecteur de courant selon la revendication 1, la surface structurée de l'électrode (2) étant agrandie dans une plage de ≥ 20 % à ≤ 200 %, de préférence de ≥ 30 % à ≤ 150 %, préférablement de ≥ 50 % à ≤ 100 %, par rapport à une surface de mêmes dimensions ayant une surface plane.

3. Électrode métallique ou collecteur de courant selon la revendication 1 ou 2, les creux (6) présentant une longueur, une largeur et/ou une profondeur dans une plage de ≥ 300 µm à ≤ 400 pm.

4. Procédé de fabrication d'une électrode métallique ou collecteur de courant pour un accumulateur d'énergie selon la revendication 1, **caractérisé en ce que** la structuration de la surface métallique avec des creux est effectuée par un procédé de rouleau à rouleau.
